# EUROPÄISCHE PATENTSCHRIFT

(11) **EP 1 639 688 B1**
(45) Veröffentlichungstag und Bekanntmachung des Hinweises auf die Patenterteilung: **20.05.2009**
(21) Anmeldenummer: 04740360.5
(22) Anmeldetag: 26.06.2004
(51) Int. Cl.: H02K 15/06

(54) **VERFAHREN UND VORRICHTUNG ZUM EINFÜHREN VON WELLENWICKLUNGEN IN ROTOR- UND STATORBLECHPAKETE ELEKTRISCHER MASCHINEN**
METHOD AND DEVICE FOR INTRODUCING WAVE WINDINGS INTO ROTOR AND STATOR SHEET STACKS OF ELECTRIC MACHINES
PROCEDE ET DISPOSITIF POUR INTRODUIRE DES ENROULEMENTS ONDULES DANS DES EMPILEMENTS DE PLAQUES DE ROTOR ET DE STATOR DE MACHINES ELECTRIQUES

(30) Priorität: 27.06.2003 DE 10328956
(43) Veröffentlichungstag der Anmeldung: 29.03.2006
(73) Patentinhaber: Elmotec Statomat Vertriebs GmbH, 61184 Karben (DE)
(72) Erfinder: SADIKU, Sadik, 63543 Neuberg (DE)
(74) Vertreter: Jochem, Bernd
(86) Internationale Anmeldenummer: PCT/EP2004/006958
(87) Internationale Veröffentlichungsnummer: WO 2005/002027

(56) Entgegenhaltungen:
- GB-A- 2 052 884

## Beschreibung

Die Erfindung betrifft ein Verfahren und eine Vorrichtung zum Formen und Einführen von Wellenwicklungen mit durch Wicklungsköpfe verbundenen Stegabschnitten in Rotor- und Statorblechpakete elektrischer Maschinen nach dem Oberbegriff der Ansprüche 1 und 14. Solch ein Verfahren und eine derartige Vorrichtung sind aus der GB-A-2052884 bekannt.

Es ist seit längerer Zeit z. B. durch die EP 1 012 951 B1, die EP 0 604 797 A2 und die US 5 881 778 bekannt, Wellenwicklungen, insbesondere verteilte Wellenwicklungen zur Herstellung von Kraftfahrzeug-Lichtmaschinen, durch eine um eine Schablone umlaufende Wickeldüse oder eine vor einer feststehenden Wickeldüse umlaufende Schablone zu erzeugen und die so geformten ringförmigen Wellenwicklungen axial in einen Stator einzuziehen.

Es ist weiterhin in der US 4,864,715 ein Verfahren zum Formen und Einführen von Wellenwicklungen mit durch Wicklungsköpfe verbundenen Stegabschnitten in ein rotorähnliches Übertragungswerkzeug beschrieben, bei dem die Wellenwicklungen von einem aus Wicklungsdraht fortlaufend geformten Wellenwicklungsband abgeschnitten werden. Der Wicklungsdraht wird beim Formvorgang zum Wellenwicklungsband von durch Stößel betätigten Formrollen abwechselnd um die rechte bzw. linke Seitenfläche von in einer Reihe auf einer umlaufend angetriebenen, endlosen Förderkette ausgebildeten Formvorsprüngen gelegt. Anschließend wird das Wellenwicklungsband frei durch die Luft tangential an das rotorähnliche Übertragungswerkzeug herangeführt. Am Ende werden die Wellenwicklungen aus den radial außen offenen Nuten des übertragungswerkzeugs in radial innen offene Nuten eines Rotor- oder Statorblechpakets verdrängt.

Nachteilig ist bei diesem Verfahren die umständliche und langwierige Formoperation jeder einzelnen Welle der Wellenwicklung durch vier jeweils nacheinander zum Einsatz kommende Drahtführer in Form von stößelbetriebenen Formrollen. Außerdem können nicht mehrere Wellenwicklungen in einer gewünschten relativen Anordnung gleichzeitig in das Übertragungswerkzeug eingeführt werden.

In dem Bestreben, mit möglichst wenig Kupfer einen optimalen Füllfaktor der Statornuten und gleichzeitig gut belüftete Wicklungsköpfe zu erhalten, die nur ein verhältnismäßig geringes Laufgeräusch erzeugen, sind gemäß EP 1 120 881 A2 Statoren mit einer Vielzahl von radial innen offenen, im Querschnitt rechteckigen Nuten geschaffen worden, in die Wellenwicklungen aus rechteckigem Spulendraht derart eingebracht werden, daß im Querschnitt einer Nut die Querschnitte durch den Spulendraht mit mehreren radialen Lagen eine sich längs der Nut erstreckende Reihe bilden und den Querschnitt der Nut ausfüllen. Die Schwierigkeit bei der Herstellung eines solchen Stators besteht darin, daß sich der starke Rechteckdraht, dessen Breite der Nutbreite entspricht, bei einem herkömmlichen Wickel- und Einziehverfahren nur schwer verformen läßt und normalerweise die stirnseitig über das Statorblechpaket vorstehenden Wicklungsköpfe wegen der Vielzahl der sich am Umfang überlappenden Spulenwindungen und der schlechten Verformbarkeit des Spulendrahts sich zu einer allzu großen radialen Breite addieren, die sich mit herkömmlichen Wickelkopf-Formwerkzeugen praktisch kaum verringern läßt.

Der Erfindung liegt deshalb die Aufgabe zugrunde, ein Verfahren und eine Vorrichtung zur Verfügung zu stellen, mit deren Hilfe sich auch aus verhältnismäßig dickem Wicklungsdraht in einfacherer Weise Wellenwicklungen herstellen und in Rotor- oder Statorblechpakete einführen lassen.

Vorstehende Aufgabe wird nach dem Vorschlag der Erfindung verfahrensmäßig dadurch gelöst, daß die Wellenwicklungen von einem fortlaufend geformten Wellenwicklungsband abgeschnitten werden und vor ihrem Einbringen in den stabförmigen Aufnehmer eine Giebelhälfte der giebelförmigen Wicklungsköpfe wenigstens teilweise durch plastische Verformung aus der Ebene der an die Wicklungsköpfe angrenzenden Stegabschnitte herausgedrückt wird, und daß die Stegabschnitte der in dem stabförmigen Aufnehmer aufgenommenen Wellenwicklungen wahlweise auch in radial außen offene Nuten eines Statorblechpakets oder eines rotorähnlichen Übertragungswerkzeugs gedrückt werden.

Die Erfindung bietet den Vorteil, daß mit nur jeweils zwei sehr einfachen Formvorgängen eine Vielzahl unterschiedlicher Anordnungen von Statorwicklungen erzeugt werden kann. Es muß lediglich in einem ersten Schritt der Wicklungsdraht fortlaufend zu einer flachen Welle, d. h. zu einem Wellenwicklungsband, gebogen werden. Das ist besonders bei Rechteckdraht vorteilhaft, weil eine Verdrillung vermieden werden kann. Danach müssen nur noch die abgelängten flachen Wellenwicklungen in einem stabförmigen Aufnehmer in der jeweils gewünschten relativen Anordnung gesammelt und dann aus der im wesentlichen tangentialen Lage fortlaufend in gleicher Richtung zu einem Ring mit dem verhältnismäßig großen Krümmungsradius der ringförmigen Anordnung der Wellenwicklung im Blechpaket gebogen werden. Starke Verformungen und Verklemmungen, wie beim axialen Einziehen vorgewickelter Wellenwicklungen, kommen nicht mehr vor. Durch die genannte plastische Verformung wird erreicht, dass sich im Wicklungskopfbereich überkreuzende Wellenwicklungen zwanglos in derselben Drahtlage in dem stabförmigen Aufnehmer und dem Stator bzw. Rotor liegen können.

Die erfindungsgemäß zur Durchführung des neuen Verfahrens vorgeschlagene Vorrichtung hat eine Formeinrichtung zur Formung von Wellenwicklungen und ist **dadurch gekennzeichnet, dass** zwischen der Formeinrichtung und einer Ladestation zum Einlegen der Wellenwicklungen in den stabförmigen Aufnehmer eine Prägeeinrichtung angeordnet ist, die ein der Wellenwicklung angepaßtes Fördermittel, z.B. einen endlos umlaufend geführten, positionsgenau steuerbaren Transportriemen mit auf der Außenseite im Abstand der Stegabschnitte angebrachten Mitnehmern, sowie seitlich neben dem Fördermittel ein oder mehrere Stempel und Matrizen aufweist, durch die wenigstens ein Teil mindestens eines Wicklungskopfs einer in den Aufnehmer einzulegenden Wellenwicklung aus der Ebene der angrenzenden Stegabschnitte herauszudrücken ist, und dass die in den stabförmigen Aufnehmer eingelegten Stegabschnitte der Wellenwicklungen wahlweise auch in radial außen offene Nuten eines Statorblechpakets oder eines rotorähnlichen Übertragungswerkzeugs einführbar sind.

Diese Vorrichtung bietet den Vorteil, daß sie grundsätzlich unabhängig davon ist, welche Wellenform, Länge und relative Lage zueinander die in ein Rotor- oder Statorblechpaket einzuführenden Wellenwicklungen haben. Sie ist daher für eine Vielzahl unterschiedlicher Gestaltungen der Wicklung anwendbar. Wenn die Wellenwicklungen in ein Rotor- oder Statorblechpaket mit radial innen offenen Nuten, also in einen äußeren Stator oder den Rotor eines Außenläufer-Motors oder -generators eingebracht werden sollen, kommt das oben erwähnte übertragungswerkzeug zum Einsatz mit einem zusätzlichen Arbeitsgang, um die zunächst in dem Übertragungswerkzeug erzeugten Wicklungen aus dessen Nuten radial nach außen in die Nuten des äußeren Stators oder Außenläufer-Rotors zu verdrängen. Die vorgeschlagene Prägeeinrichtung besorgt die vorstehend erwähnte plastische Verformung der Wicklungsköpfe, die für eine zwanglose Lage der Wellenwicklungen in den Nuten des Aufnehmers und des Stators bzw. Rotors erforderlich ist.

Vorteilhafte Ausgestaltungen des vorstehend bezeichneten Verfahrens und der neuen Vorrichtung sind in den Unteransprüchen angegeben.

Nachstehend wird anhand der beiliegenden Zeichnung ein Ausführungsbeispiel der Erfindung näher erläutert. Es zeigen:
- Fig. 1: eine Wellenwicklung vor einem stabförmigen Aufnehmer und seitlichen Führungsschienen;
- Fig. 2: zwölf in den stabförmigen Aufnehmer nach Fig. 1 eingelegte Wellenwicklungen, die anschließend gemeinsam in ein Rotor- oder Statorblechpaket oder in ein rotorähnliches Übertragungswerkzeug eingebracht werden;
- Fig. 3: eine Draufsicht auf eine aus mehreren Teilvorrichtungen bestehende Anlage zum Formen und Einführen von Wellenwicklungen in Stator-Blechpakete;
- Fig. 4: eine Seitenansicht einer Einrichtung zum fortlaufenden Formen eines Wellenwicklungsbandes mit einer angeschlossenen Prägeeinrichtung;
- Fig. 5: eine Draufsicht auf die Formeinrichtung und die Prägeeinrichtung nach Fig. 4;
- Fig. 6A, B, C: Seitenansichten, mit Bezug auf Fig. 4 von links, der Einrichtung zum Formen eines Wellenwicklungsbandes, wobei die Teile der Einrichtung in verschiedenen Stadien während der Formung einer Wellenwicklung gezeigt sind;
- Fig. 7: eine Draufsicht von oben auf den einen Teil der Einrichtung zum Formen des Wellenwicklungsbandes bildenden Drahtführer;
- Fig. 8: eine vereinfachte Seitenansicht eines Rotor- oder Statorblechpakets oder eines Übertragungswerkzeugs mit radial außen offenen Nuten im Zusammenwirken mit dem in Fig. 1 und 2 gezeigten stabförmigen Aufnehmer und Leitorganen zum Überleiten der Wellenwicklungen von dem Aufnehmer in das Blechpaket bzw. in das Übertragungswerkzeug;
- Fig. 9: eine schematische Draufsicht auf den stabförmigen Aufnehmer und die geschnittenen Leitorgane nach Fig. 8, wobei aus zeichnerischen Gründen auch die in den Nuten des Aufnehmers liegenden Wellenwicklungen dargestellt sind;
- Fig.10: einen vereinfachten Teil-Querschnitt durch ein rotorähnliches Übertragungswerkzeug in einer bei der Übertragung von Wellenwicklungen in ein Statorblechpaket eingenommenen konzentrischen Stellung und
- Fig.11: einen vereinfachten Längsschnitt durch das Übertragungswerkzeug nach Fig. 10.

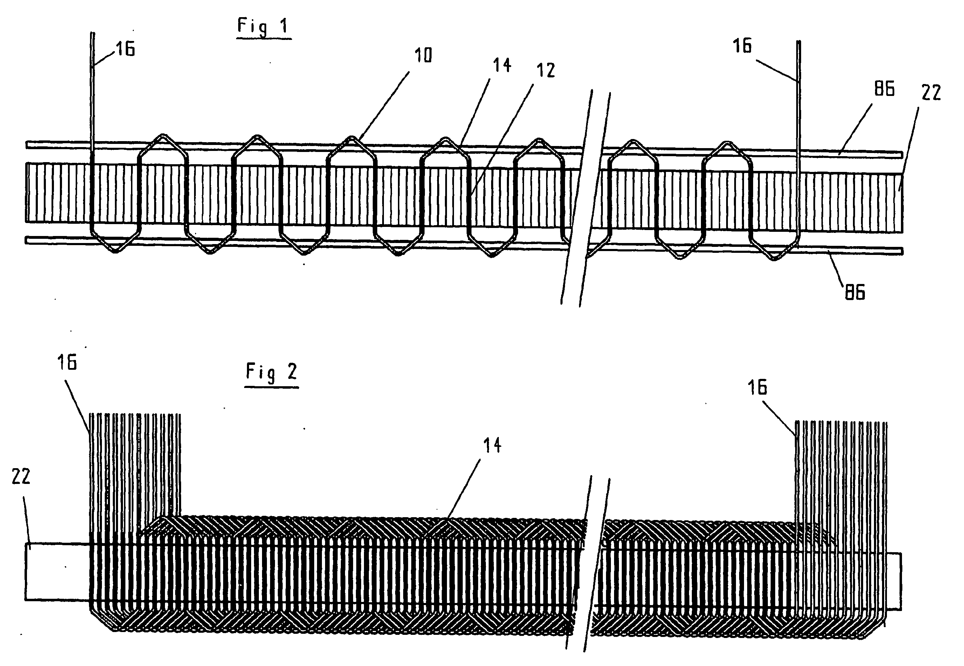

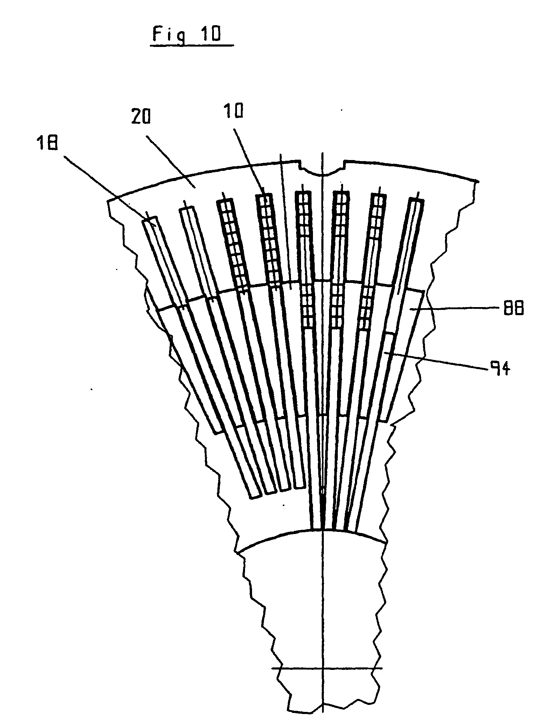

Die in Fig. 1 gezeigte Wellenwicklung 10 hat je nach der Anzahl und Belegung der Nuten des damit zu bestückenden Rotor- oder Statorblechpakets eine bestimmte Anzahl Wellen, die durch parallele Stegabschnitte 12 und giebelförmige Wicklungsköpfe 14 gebildet sind. Die Anschlußenden der Wellenwicklung sind mit 16 bezeichnet. Im Beispielsfall wird mit der gezeigten Wellenwicklung 10 jede sechste Nut eines Statorblechpakets belegt, wobei sich die Stegabschnitte 12 durch die Statornuten erstrecken und die giebelförmigen Wicklungsköpfe 14 stirnseitig aus dem Statorblechpaket vorstehen. Zwischen zwei von der Wellenwicklung 10 belegten Statornuten bleiben im Ausführungsbeispiel jeweils fünf Statornuten frei, in die weitere derartige Wellenwicklungen 10 eingeführt werden. Insgesamt können z. B. in die in Fig. 10 im Querschnitt gezeigten rechteckigen, radial innen offenen Nuten 18 eines Statorblechpakets 20 jeweils acht Schichten bzw. Lagen - worunter hier eine Drahtlage in einer Nut 18 verstanden wird - vorhanden sein. Diese Zahl ist aber nur ein Ausführungsbeispiel. Die im Querschnitt rechteckigen Nuten 18 könnten jeweils auch schon mit vier Drahtlagen eines stärkeren Rechteckdrahts gefüllt sein. Je nach der Art des Motors bzw. Generators und der gewählten Wicklung können noch andere Lagenzahlen vorkommen, wobei auch zwei oder mehr Drahtlagen in einer Nut durch eine einzige, einstückige Wellenwicklung 10 gebildet sein können. Dies ist z. B. bei einer sog. verteilten Wellenwicklung der Fall, bei der die Stegabschnitte in zwei oder mehr Lagen in denselben Statornuten liegen, aber die Wicklungsköpfe von einer oder mehreren Lagen auf der einen Stirnseite aus dem Blechpaket hervorragen, während die Wicklungsköpfe der anderen Lage bzw. Lagen auf der gegenüberliegenden Seite aus dem Statorblechpaket vorstehen. Eine weitere Möglichkeit, mit einer einzigen Wellenwicklung mehrere Drahtlagen einer Nut auszufüllen, besteht darin, eine so lange Wellenwicklung nach Fig. 1 zu benutzen, daß sie sich nach dem Einführen in das Statorblechpaket mehrmals um dessen Umfang erstreckt.

Die Vorteilhaftigkeit der giebelförmigen Wicklungsköpfe wird deutlich, wenn man sich anhand der Fig. 1 vorstellt, daß in den dort gezeigten stabförmigen Aufnehmer 22 nach der gezeigten ersten Wellenwicklung 10 eine weitere derartige Wellenwicklung in diejenigen Nuten gelegt wird, die sich jeweils unmittelbar rechts von den durch die Stegabschnitte 12 der ersten Wellenwicklung 10 belegten Nuten befinden. Die dritte derartige Wellenwicklung wird dann wiederum in die nächsten sich nach rechts anschließenden Nuten eingelegt und ebenso die vierte, fünfte und sechste Wellenwicklung. Am Ende wird man feststellen, daß immer nur die linken Schenkel der giebelförmigen Wicklungsköpfe 14 über die rechten Schenkel der Wicklungsköpfe der zuvor schon eingelegten Wellenwicklungen hinweggeführt werden müssen, die rechten Schenkel dann aber keine schon zuvor eingelegten Wellenwicklungen zu kreuzen brauchen. Man wird weiterhin feststellen, daß sich alle definierten Kreuzungspunkte, an denen ein linker Schenkel über einen rechten Schenkel einer zuvor eingelegten Wellenwicklung hinweggeführt ist, jeweils die einzige Kreuzung an dieser Stelle bilden. Demnach braucht man nur die kreuzenden linken Schenkel der Wicklungsköpfe insgesamt oder stellenweise an den Kreuzungspunkten etwas anzuheben und danach wieder in die Ebene der Stegabschnitte abzusenken, um zu erreichen, daß sämtliche Stegabschnitte und jeweils die Hälfte der giebelförmigen Wicklungsköpfe der nacheinander verlegten sechs Wellenwicklungen zwanglos in derselben Drahtlage in den Nuten liegen. Das stellenweise Anheben und Absenken einer Giebelhälfte, um diese über eine oder mehrere Giebelhälften zuvor eingelegter Wellenwicklungen hinwegzuführen, kann durch eine Prägung der Wellenwicklungen vor dem Einlegen in den stabförmigen Aufnehmer 22 geschehen. Es versteht sich, daß alternativ auch die überkreuzte Giebelhälfte abgesenkt oder die eine Giebehälfte etwas angehoben und die andere etwas abgesenkt werden kann.

Anhand von Fig. 1 und Fig. 2 ist auch ersichtlich, daß eine Wellenwicklung von zweifacher Umfangslänge in der Mitte derart gefaltet und zusammengelegt werden kann, daß jeweils zwei Stegabschnitte übereinander liegen und die Wicklungsköpfe gegenüberliegend angeordnet sind. Alternativ könnte von zwei identischen Wellenwicklungen einfacher Umfangslänge die eine gewendet, auf die andere gelegt und an einem Ende elektrisch mit dieser verbunden werden. Man erhält dadurch ebenfalls eine verteilte Wellenwicklung mit jeweils zwei Stegabschnitten in jeder Nut und mit direkt gegenüberliegend angeordneten Wicklungsköpfen.

Wenn die Wellenwicklungen 10 die doppelte Umfangslänge haben, kann beim Einlegen in die Nuten des stabförmigen Aufnehmers 22 auch so vorgegangen werden, daß zunächst in der oben beschriebenen Reihenfolge die sechs Wellenwicklungen, die eine Drahtlage bilden, nur mit ihrer halben Länge eingelegt werden. Dann wird auf der zweiten Hälfte der Länge des stabförmigen Aufnehmers 22 die Reihenfolge umgedreht, so daß der mit seiner ersten Hälfte zuletzt eingelegte Wicklungsdraht als erster in die zweite Hälfte des Aufnehmers 22 eingelegt wird, die vorletzte Wellenwicklung als zweite usw.. Man erreicht damit, daß bei den Wicklungsköpfen der zweiten Drahtlage im Stator die Drahtkreuzungen auf der anderen Giebelhälfte liegen.

Neben solchen Faltungen, elektrischen Verbindungen und Abwechslungen der Reihenfolge besteht beim Einlegen der Wellenwicklungen in die Nuten des Aufnehmers 22 die weitere Möglichkeit, einzelne Wellen einer bereits eingelegten Wellenwicklung aufzubiegen und nach dem Einlegen einer oder mehrerer weiterer Wellenwicklungen wieder in die Nuten des Aufnehmers 22 zurückzubiegen, wodurch an einer bestimmten Stelle eine Veränderung der Reihenfolge der übereinander liegenden Wellenwicklungen erzielt wird.

Fig. 2 veranschaulicht die sehr gleichmäßige Anordnung der Wicklungsköpfe einer mehrlagigen Wicklung.

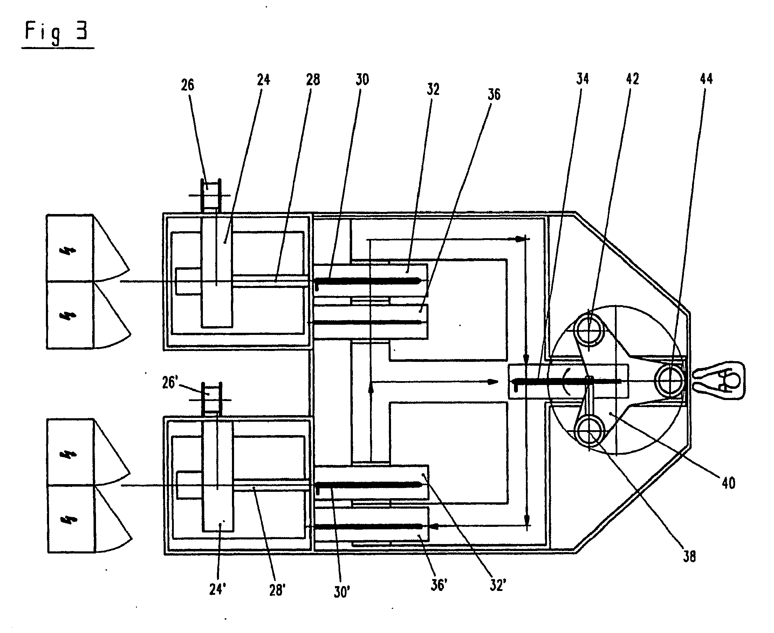

Fig. 3 zeigt in Draufsicht einen Überblick über eine vollständige Produktionsanlage zum Wickeln und Einführen von Wellenwicklungen in Statorblechpakete. Dabei sind mit 24 und 24' zwei parallel arbeitende Formeinrichtungen bezeichnet, in denen jeweils ein von einer Vorratsrolle 26 bzw. 26' abgezogener Wicklungsdraht kontinuierlich zu einem Wellenwicklungsband geformt wird, aus dem die in Fig. 1 und 2 gezeigten Wellenwicklungen als Abschnitte gewonnen werden. Mit 28 bzw. 28' ist in Fig. 3 jeweils eine Prägestation bezeichnet, in der die Wicklungsköpfe der Wellenwicklungen durch Stempel und Matrizen so geformt werden, daß sie in unterschiedlichen Ebenen aneinander vorbeigeführt werden können. Außerdem können in dieser Station die Wellenwicklungen 10 in der jeweils benötigten Länge von dem kontinuierlich erzeugten Wellenwicklungsband abgeschnitten und die Anschlußenden 16 ausgezogen werden.

In der nächsten, mit 30 bzw. 30' bezeichneten Station werden die Wellenwicklungen 10 in der vorgesehenen Reihenfolge und Anordnung in die Nuten des stabförmigen Aufnehmers 22 eingelegt, und zwar mit so vielen Drahtlagen in jeder Nut, wie gemeinsam in einem einzigen Arbeitsschritt in die Nuten eines Rotor- oder Statorblechpakets oder eines rotorähnlichen Übertragungswerkzeugs eingebracht werden. Gemäß Fig. 3 ist ein Fördersystem mit Paletten vorgesehen, welche jeweils einen stabförmigen Aufnehmer 22 mit Nuten tragen. Nachdem ein Aufnehmer 22 gemäß Fig. 2 mit Wellenwicklungen beladen worden ist, fährt die entsprechende Palette 32 bzw. 32' in die bei 34 gezeigte Übertragungsstation, und es rückt eine weitere Palette 36 bzw. 36' mit einem leeren stabförmigen Aufnehmer 22 in die Ladestation 30 nach.

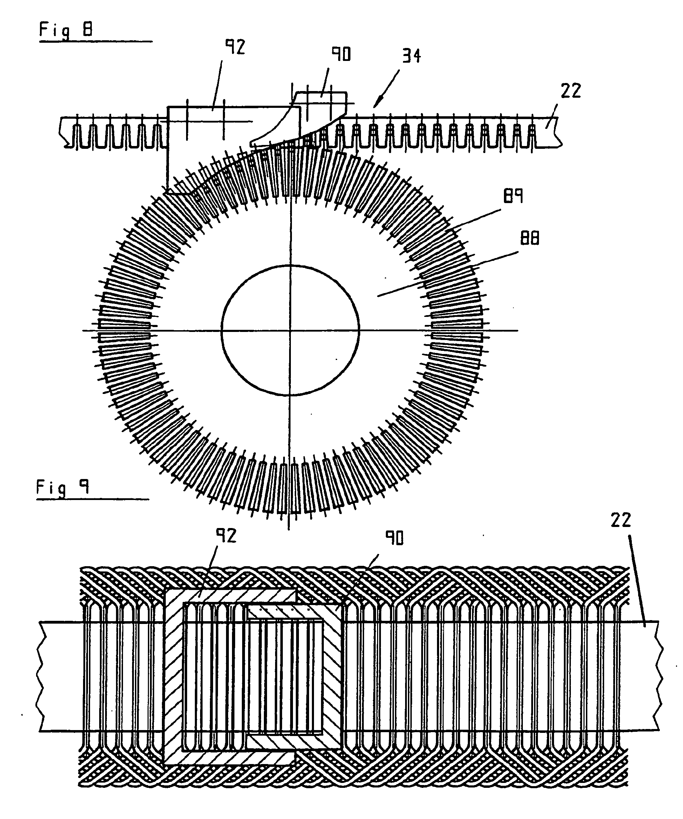

In der Übertragungsstation 34 werden die Wellenwicklungen von einem stabförmigen Aufnehmer 22 im Beispielsfall zunächst auf ein rotorähnliches Übertragungswerkzeug mit radial außen offenen Nuten übertragen. Zu Einzelheiten wird nachfolgend auf Fig. 8 und 9 Bezug genommen. Das befüllte Übertragungswerkzeug wird anschließend von einem Drehtisch 40 in eine Einschubstation 38 verschwenkt, in der das rotorähnliche Übertragungswerkzeug in die Bohrung eines Statorblechpakets derart eingeführt wird, daß dessen radial innen offene Nuten mit den Nuten des Übertragungswerkzeugs fluchten, so daß radial bewegbare Schieber die Wellenwicklungen aus dem Übertragungswerkzeug radial in die Nuten des Statorblechpakets schieben können. Danach verschwenkt der Drehtisch 40 das Statorblechpaket in eine Kompressionsstation 42, in der die zuerst eingebrachte Gruppe von Wellenwicklungen in den Statornuten noch weiter radial nach außen geschoben oder gezogen und die Wicklungsköpfe komprimiert werden. Anschließend wird ein fertig bewickeltes Statorblechpaket von dem Drehtisch 40 zu einer Ausgabestation 44 transportiert und dort abgenommen oder ausgespeist. Wenn noch eine zweite oder weitere Gruppe von Wellenwicklungen in dem Statorblechpaket aufgenommen werden soll, wird das teilweise bewickelte Statorblechpaket noch einmal in die Einschubstation 38 gebracht und mit der zweiten oder weiteren Gruppe von Wellenwicklungen bestückt. Dann folgt wiederum ein Kompressionsvorgang in der Kompressionsstation 42, bevor das Statorblechpaket in der Ausgabestation abgenommen wird.

Es kann zweckmäßig sein, die in der Formeinrichtung 24' geformten Wellenwicklungen mit etwas schmaleren Wicklungsköpfen auszubilden als in der Formeinrichtung 24 und in der Übertragungsstation 34 und der Einschubstation 38 abwechselnd erst eine Gruppe Wellenwicklungen aus der Formeinrichtung 24 und dann eine Gruppe Wellenwicklungen aus der Formeinrichtung 24' mittels passender Übertragungswerkzeuge in das Statorblechpaket einzuführen. Mit den unterschiedlich breiten Wicklungsköpfen kann man den unterschiedlichen Radien der Wellenwicklungen nach ihrem Einführen in das Statorblechpaket Rechnung tragen.

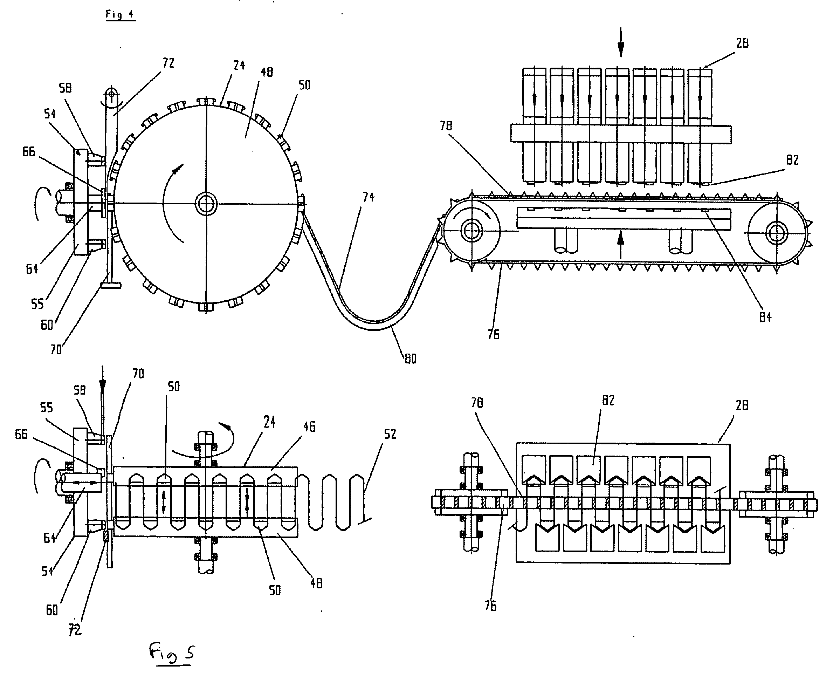

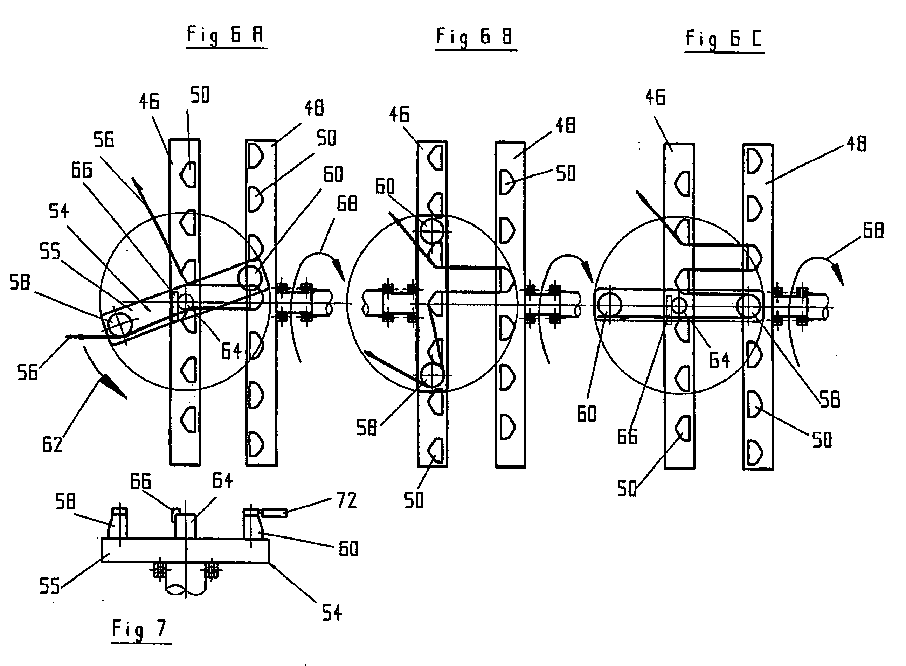

Die Fig. 4, 5 und 6A, B, C zeigen die Formeinrichtung 24 genauer und die Fig. 4 und 5 daneben auch die Prägeeinrichtung 28. Die Hauptteile der Formeinrichtung 24 sind zwei kontinuierlich umlaufende, axial nebeneinander angeordnete Scheiben 46, 48 mit jeweils über die Umfangsfläche vorstehenden Formvorsprüngen 50. Die Scheiben 46, 48 wirken bei der kontinuierlichen Erzeugung eines Wellenwicklungsbandes 52 mit einem Drahtführer zusammen, der unmittelbar neben dem Umfang der Scheiben 46, 48 um eine horizontale Achse schrittweise rotierend gelagert ist. Die Formung des vom Vorrat 26 zugeführten Wicklungsdrahts zum Wellenwicklungsband 52 geht am besten aus der vereinfachten schematischen Darstellung in den Fig. 6A, 6B und 6C hervor.

Zu Beginn des kontinuierlichen Formvorgangs wird der Anfang des mit 56 bezeichneten Wicklungsdrahts gemäß Fig. 6A vorübergehend an einem Formvorsprung 50 der linken Scheibe 46 geklemmt oder in anderer Weise gehalten und um den in Umlaufrichtung folgenden nächsten Formvorsprung 50 der rechten Scheibe 48 als Schlaufe gelegt. Wenn anschließend der Drahtführer 54, der aus einem drehbar gelagerten Träger 55, z. B. in Form einer Scheibe oder eines Balkens und diametral gegenüberliegend nahe dem äußeren Umfang angebrachten, axial zu den Scheiben 46, 48 hin vorspringenden Mitnehmerzapfen 58, 60 besteht, gemäß Richtungspfeil 62 zu drehen beginnt, stößt im Beispielsfall nach Fig. 6A der Mitnehmerzapfen 58 gegen den vom Vorrat 26 kommenden Wicklungsdraht 56 und beginnt, an seinem Umfang eine Schlaufe zu bilden. Gleichzeitig führt der Mitnehmerzapfen 58 den Wicklungsdraht auch um einen Formvorsprung 50 der linken Scheibe 46, auf dessen Umfangsfläche er durch einen zentral am Träger 55 angeordneten oder sich undrehbar durch den Träger 55 erstreckenden, axial gegen den Formvorsprung vorgeschobenen Stößel 64 gehalten wird. Der Stößel ist vorzugsweise an seinem freien Ende mit einer Haltenase 66 ausgebildet, die den Draht ausreichend weit auf den Formvorsprung 50 schiebt. Somit wird in der in Fig. 6A gezeigten Phase gleichzeitig an dem vorstehend genannten Formvorsprung 50 der Scheibe 46 und am Mitnehmerzapfen 58 je eine Schlaufe gebildet. Bei weiterer Drehbewegung des Drahtführers 54 im Sinne des Richtungspfeils 62 und gleichzeitiger Drehung der Scheiben 46 und 48 im Sinne des Richtungspfeils 68 vergrößern sich die Umschlingswinkel der beiden Schlaufen, wie das in Fig. 6B dargestellte Zwischenstadium zeigt. Dort befinden sich die Mitnehmerzapfen 58 und 60 etwa senkrecht übereinander vor der Scheibe 46. Der Stößel 64 wurde von der Scheibe 46 zurückgezogen, weil inzwischen die Drahtschlaufe auf dem Vorsprung 50 der ein Stück weiter gedrehten Scheibe 46 von allein hält.

Um zu verhindern, daß in der Phase nach Fig. 6B der Wicklungsdraht 56 gegen den nächsten Formvorsprung 50 der Scheibe 46 stößt, der dem die Schlaufe bildenden Formvorsprung 50 folgt, ist ein in Fig. 4 gezeigtes Leitblech 70 vorgesehen, das den Wicklungsdraht 56 über den nächsten Formvorsprung 50 hinweg leitet.

Nachdem der Drahtführer 54 weitergedreht worden ist und die Stellung nach Fig. 6C erreicht hat, befindet sich unmittelbar axial vor dem Mitnehmerzapfen 58 ein Formvorsprung 50 der Scheibe 48. Die Drehbewegung des Drahtführers 54 wird kurzzeitig unterbrochen, und ein in Fig. 4 und 7 gezeigter Abstreifer 72 streift die auf dem Mitnehmerzapfen 58 sitzende Drahtschlaufe axial von diesem herab und auf den vor ihm befindlichen Formvorsprung 50 hinüber. Gleichzeitig oder unmittelbar danach fährt der Stößel 64 wieder axial vor und schiebt den Draht 56 über, d.h. in Bewegungsrichtung vor den Formvorsprung 50 der Scheibe 46, an dem er gerade zuvor durch das Leitblech 70 vorbeigeleitet worden ist, so daß nunmehr dieser Formvorsprung die nächste Schlaufe bildet.

Anschließend wiederholen sich die vorstehend geschilderten Vorgänge, wenn bei fortgesetzter Drehung der Mitnehmerzapfen 60 in diejenige Stellung gelangt, in der sich in Fig. 6A der Mitnehmerzapfen 58 befindet. Wie in der Zeichnung gezeigt, sind die Formvorsprünge 50 auf den beiden Scheiben 46 und 48 relativ zueinander auf Lücke angeordnet, wobei der am Umfang gemessene Zwischenabstand zwischen einem Formvorsprung ·50 auf der einen Scheibe und dem unmittelbar nachfolgenden Formvorsprung 50 auf der anderen Scheibe etwa so groß ist wie der Durchmesser des Wicklungsdrahts 56. Da die kontinuierliche Drehbewegung der Scheiben 46 und 48 auf die unterbrochene Drehbewegung des Drahtführers 54 so abgestimmt ist, daß auf jeden Formvorsprung 50 beider Scheiben 46, 48 nacheinander eine Drahtschlaufe übertragen wird, ergibt sich insgesamt das ununterbrochene Wellenwicklungsband 52.

Um für den Drahtführer 54 eine Drehbewegung mit kurzzeitigen Unterbrechungen jeweils in derjenigen Phase zu erhalten, in der Drahtschlaufen von den Mitnehmerzapfen 58, 60 auf die Formvorsprünge 50 der Scheibe 48 hinübergestreift werden, kann ein geeignetes Schrittschaltwerk, z.B. in Form eines Malteserkreuzantriebs benutzt werden.

Der Drahtabzug vom Drahtvorrat 26 enthält eine Drahtbremse. Daher steht der Wicklungsdraht 56 während der Bildung von Schlaufen um die Formvorsprünge 50 unter Zugspannung, und es findet bereits während des Ablegens der Drahtschlaufen auf den Formvorsprüngen 50 eine gewisse Formung zu Wellen bzw. einer Zickzackform statt. Die Zugspannung im Wicklungsdraht würde jedoch normalerweise nicht ausreichen, um die giebelförmigen Wicklungsköpfe 14 mit ihrem Winkeln und geraden Zwischenstücken exakt zu formen, selbst wenn die Formvorsprünge 50 einen der Form der Wicklungsköpfe 14 entsprechenden Querschnitt haben. Um die gewünschte Form der Wicklungsköpfe 14 zu erzielen, ist deshalb vorgesehen, daß die Formvorsprünge 50 in den beiden Umfangsreihen auf den Scheiben 46, 48 auf dem Umfangsbereich, auf dem das Wellenwicklungsband 52 von der Schlaufenbildungsstelle zu der Stelle des Ablaufs von den Scheiben 46, 48 transportiert wird, zunächst um ein bestimmtes Maß, das ausreicht, eine verhältnismäßig hohe, für die Formgebung des Wicklungsdrahts notwendige Zugspannung zu erreichen, vergrößert und dann wieder verringert wird. Wenn die Formvorsprünge 50 mit dem vorgesehenen Zwischenabstand auf einer breiten Rolle in axialer Richtung steuerbar verschieblich angebracht sind, kann die Rolle gleichmäßig um eine gerade Achse rotieren. Wenn dagegen statt einer breiten Rolle zwei Scheiben 46, 48 zum Einsatz kommen, brauchen nicht die Formvorsprünge 50 eine relative axiale Bewegung auszuführen, denn es genügt, die Scheiben 46, 48 so zu lagern, daß sich während der Drehbewegung der Abstand zwischen zwei schräg gegenüberliegenden Formvorsprüngen, die das Wellenwicklungsband tragen, erst vergrößert und dann wieder verringert. Im einfachsten Fall können zu diesem Zweck die Drehachsen der beiden Scheiben 46, 48 nach seitlich außen abfallend geneigt sein. Dann ist der Abstand zwischen den beiden Scheiben 46, 48 und damit zwischen den schräg gegenüberliegenden Formvorsprüngen 50 oben am größten, unten am kleinsten und an der Schlaufenbildungsstelle etwa ebenso groß wie an der Stelle, wo das Wellenwicklungsband 52 von den Scheiben 46, 48 abläuft. Auf dem Weg von der Schlaufenbildungsstelle zur Ablaufstelle vergrößert sich daher, wie gewünscht, der Zwischenabstand zwischen den Formvorsprüngen 50, und wird dann wieder kleiner. Selbstverständlich könnten auch andere Lagerungen für die Scheiben 46, 48 gewählt werden, die eine Taumelbewegung der Scheiben mit der genannten Wirkung erzeugen.

Schließlich sei angemerkt, daß es zur Erzeugung giebelförmiger Wicklungsköpfe 14 nicht notwendig ist, Formvorsprünge 50 mit einer entsprechenden Querschnittform zu benutzen. Letztere könnten z.B. auch jeweils durch drei Stifte ersetzt werden, die an denjenigen Stellen sitzen, wo sich die seitlich äußersten Ecken der Formvorsprünge 50 befinden. Die Herstellung der Stifte ist kostengünstiger als die Herstellung der Formvorsprünge 50.

Es versteht sich, daß die Formvorsprünge 50 statt des giebelförmigen Querschnitts auch eine andere für Wicklungsköpfe geeignete Form haben können. Entsprechendes gilt für die Anordnung der alternativ zur Anwendung kommenden Stifte.

An der der Schlaufenbildungsstelle im Beispielsfall etwa gegenüberliegenden Stelle am Umfang der Scheiben 46, 48 kann ein in dem Zwischenraum zwischen den Scheiben 46, 48 angeordnetes Abweisblech dafür sorgen, daß sich das Wellenwicklungsband 52 zuverlässig von den Formvorsprüngen 50 löst und zunächst eine frei hängende Schlaufe 74 bildet, bevor das Wellenwicklungsband 52 von einem endlos umlaufend antreibbaren Transportriemen 76 mit auf seiner Außenseite angebrachten Mitnehmern 78 erfaßt und zu der Prägeeinrichtung 28 transportiert wird. Die frei hängende Schlaufe 74 schwankt während des Betriebs in ihrer Länge und bildet einen Pufferspeicher, der die infolge Stillstandszeiten des Transportriemens 76 ungleichmäßige Abzugsgeschwindigkeit im Verhältnis zu der gleichförmigen Fördergeschwindigkeit der Scheiben 46, 48 ausgleicht. Die Schlaufe 74 kann gegebenenfalls durch eine unter Gewichtsbelastung federnd nachgiebige, flexible Führung 80 unterstützt sein, um einer zu starken Verlängerung des Wellenwicklungsbandes 52 infolge Eigengewichts vorzubeugen.

Die Prägestation 28 hat die Funktion, die Wicklungsköpfe 14 senkrecht zur Ebene des Wellenwicklungsbands 52 so zu verformen, daß sich die im montierten Zustand im Statorblechpaket überlappenden Wicklungsköpfe nicht behindern und die Wellenwicklungen 10 derselben Drahtlage, z. B. der radial äußersten Drahtlage, möglichst spannungsfrei in ihre jeweilige Lage bzw. Position in den Statornuten eingebracht werden können, so daß nicht erst bei dem Einführvorgang die sich kreuzenden Wicklungsköpfe so stark aneinander gepreßt werden müssen, daß sie sich verformen und die Stegabschnitte der Wellenwicklungen 10 ihre vorgesehene Lage in den Statornuten einnehmen können.

Entsprechend der Aufgabenstellung sind die Stempel 82 und Matrizen 84 so dimensioniert und gestaltet, daß bei jedem Prägevorgang ein oder mehrere Wicklungsköpfe 14 insgesamt oder teilweise relativ zur Hauptebene des Wellenwicklungsbandes 52 nach oben oder unten herausgedrückt werden können. Es lassen sich auf diese Weise mit einer ausreichenden Anzahl von Stempeln sämtliche Wicklungsköpfe 14 einer Wellenwicklung 10 gleichzeitig mit einem einzigen Hub formen. Alternativ besteht die Möglichkeit, die Wicklungsköpfe 14 einer Wellenwicklung 10 mit weniger Stempeln 82 in mehreren Hüben zu formen. Normalerweise wird man während der Formgebung den Transportriemen 76 anhalten, wobei in dieser Zeitspanne die Scheiben 46, 48 das erzeugte Wellenwicklungsband 52 in die als Pufferspeicher dienende lose Schlaufe 74 fördern. Wenn eine hohe Fertigungskapazität erwünscht ist, können die Stempel 82 und Matrizen 84 in Verbindung mit einem längeren Transportriemen 76 auch fliegend betrieben werden, so daß sie während des Formvorgangs mit der Geschwindigkeit des Transportriemens 76 parallel zu diesem verfahren werden. Bei einer solchen Arbeitsweise bedarf es nicht der frei hängenden Schlaufe 74.

In der Prägeeinrichtung 28 sind neben den Stempeln 82 nicht gezeigte Schneidwerkzeuge angebracht, die das Wellenwicklungsband 52 an vorbestimmten Stellen durchtrennen, um Wellenwicklungen 10 bestimmter Länge zu erhalten. Die Drahtenden der abgeschnittenen Wellenwicklungen werden von nicht gezeigten Greifern zu den in Fig. 1 und 2 gezeigten Anschlußenden 16 ausgezogen. Außerdem können in der Prägeeinrichtung 28 oder in einer weiteren Formstation die Stegabschnitte 12 von aus Runddraht erzeugten Wellenwicklungen zu einem rechteckigem Querschnitt umgeformt werden.

An die Prägeeinrichtung 28 schließt sich gegebenenfalls noch eine weitere Arbeitsstation an, in der maschinell oder von Hand eine lange Wellenwicklung 10 derart auf sich selbst zurückgefaltet wird, daß eine halb so lange verteilte Wellenwicklung entsteht. Alternativ können auch zwei Wellenwicklungen 10 zu einer verteilten Wellenwicklung übereinandergelegt und an einem Ende elektrisch miteinander verbunden werden. Weiterhin besteht auch die Möglichkeit, zwei oder mehr Wellenwicklungen, die nebeneinander in unterschiedlichen Nuten liegen sollen, an bestimmten Stellen derart zu kreuzen, daß auf einem Teil ihrer Länge die eine Wellenwicklung unter einer anderen Wellenwicklung liegt, aber auf einem anderen Teil ihrer Länge darüber liegt.

Im nächsten Arbeitsschritt werden die, wie vorstehend beschrieben, geformten Wellenwicklungen 10 an der in Fig. 3 mit 30 bezeichneten Ladestation in die Quernuten des auch in Fig. 1 und 2 sowie in Fig. 8 und 9 gezeigten stabförmigen bzw. zahnstangenförmigen Aufnehmers 20 eingelegt. Zu diesem Zweck befördert ein endloser Transportriemen nach Art des Transportriemens 76 nacheinander mehrere Wellenwicklungen 10, deren Wicklungsköpfe 14 dabei in den in Fig. 1 gezeigten Führungsschienen 86 geführt sind, in die jeweils vorbestimmte Lage über oder unter bestimmten Quernuten des stabförmigen Aufnehmers 22. Dann werden die Wellenwicklungen 10 durch Anheben bzw. Absenken der Führungsschienen 86 oder alternativ durch Anheben oder Absenken des stabförmigen Aufnehmers 22 in dessen Quernuten eingeführt. Selbstverständlich besteht auch die Möglichkeit, die Wellenwicklungen 10 von oben in die Nuten des stabförmigen Aufnehmers 22 einzuführen und dann diesen zusammen mit den eingelegten Wellenwicklungen zu wenden, um ihn in die Lage nach Fig. 8 zu bringen.

In Fig. 8 ist die Übertragung der Wellenwicklungen von dem stabförmigen Aufnehmer in ein Rotormagazin bzw. rotorähnliches Übertragungswerkzeug 88 mit radial außen offenen Nuten 89 gezeigt. Dieser Vorgang findet in der in Fig. 3 mit 34 bezeichneten Übertragungsstation statt. Anstelle des Übertragungswerkzeugs 88 könnte dort auch ein Rotor- oder Statorblechpaket mit radial außen offenen Nuten vorhanden sein.

Gemäß Fig. 8 wird für den Übertragungsvorgang der stabförmige Aufnehmer 22 mit Bezug auf das rotorähnliche Übertragungwerkzeug 88 bzw. ein an seiner Stelle vorhandenes Rotor- oder Statorblechpaket tangential ausgerichtet, wobei die Nuten des stabförmigen Aufnehmers 22 und die Nuten 89 des Übertragungswerkzeugs 88 mit ihren Öffnungen gegeneinander weisen. Außerdem sind der Abstand der Nuten und die Relativbewegung des Aufnehmers 22 und des Übertragungswerkzeugs 88 so aufeinander abgestimmt, daß an der tangentialen Berührungsstelle die beiden gegenüberliegenden Nuten jeweils miteinander fluchten. Im Ausführungsbeispiel nach Fig. 8 führt während des Übertragungsvorgangs das Übertragungswerkzeug 88 eine Drehbewegung entgegen dem Uhrzeigersinn um eine ortsfeste Achse aus, während gleichzeitig der stabförmige Aufnehmer 22 mit der Umfangsgeschwindigkeit des Übertragungswerkzeugs 88 entlang einer nicht gezeigten Linearführung geradlinig von rechts nach links vorgeschoben wird. Während diese koordinierten Bewegungen stattfinden, drücken zwei in Draufsicht U-förmige Leitorgane 90, 92 die gegebenenfalls bis dahin durch Führungsschienen entsprechend den Führungsschienen 86 in den Nuten des Aufnehmers 22 gehaltenen Wellenwicklungen 10 im Bereich des tangentialen Berührungspunkts und dem in Bewegungsrichtung dahinterliegenden Bereich aus den Nuten des Aufnehmers 22 in die jeweils gegenüberliegenden Nuten des Übertragungswerkzeugs 88. Da der stabförmige Aufnehmer 22 gemäß Fig. 1, 2 und 9 schmaler ist als die Länge der Stegabschnitte 12 der Wellenwicklungen 10, können die U-förmigen Leitorgane 90, 92 auf beiden Seiten neben dem stabförmigen Aufnehmer 22 an den äußeren Bereichen der Stegabschnitte 12 sowie den Wicklungsköpfen 14 angreifen, um die Stegabschnitte nacheinander aus den Nuten des Aufnehmers 22 zu verdrängen und in die Nuten des Übertragungswerkzeugs 88 zu schieben.

Statt der zwei Leitorgane 90, 92 könnte auch ein einziges, größeres Leitorgan Verwendung finden. Alternativ bestünde die Möglichkeit, maschinell betätigbare Stößel oder Schieber vorzusehen, die mit einem oder zwei Hüben jeweils die in einer Nut des Aufnehmers 22 gehaltenen Stegabschnitte in die gegenüberliegende Nut des Übertragungswerkzeugs 88 schieben.

Die in Fig. 8 gezeigte tangentiale Anordnung eines gradlinig stabförmigen Aufnehmers 22 mit Bezug auf das rotorähnliche Übertragungswerkzeug 88 kommt für den Übertragungsvorgang mit sehr einfachen Bewegungsantrieben aus. Wenn man darauf zu verzichten bereit ist, kann man auch erfindungsgemäß einen mit Bezug auf Fig. 8 mit einem bestimmten Radius nach oben oder unten gekrümmten stabförmigen Aufnehmer 22 verwenden, weil auch dann am Punkt der Berührung des Überrtragungswerkzeugs 88 eine im wesentlichen tangentiale Ausrichtung und Relativbewegung vorhanden ist. In allen Fällen kann, während das jeweils andere Teil feststeht, entweder das Übertragungswerkzeug 88 oder der stabförmige Aufnehmer 22 in einer kombinierten Bewegung so geführt werden, daß eine die Übertragung der Wellenwicklungen erlaubende Abwälzbewegung zustande kommt.

Wieviele Wellenwicklungen in einem Arbeitsgang von dem stabförmigen Aufnehmer 22 auf das Übertragungswerkzeug 88 und von diesem auf ein Stator- oder Rotorblechpaket mit radial innen offenen Nuten übertragen werden, hängt vom Einzelfall ab. Normalerweise wird man wohl mit zwei Übertragungsvorgängen auskommen.

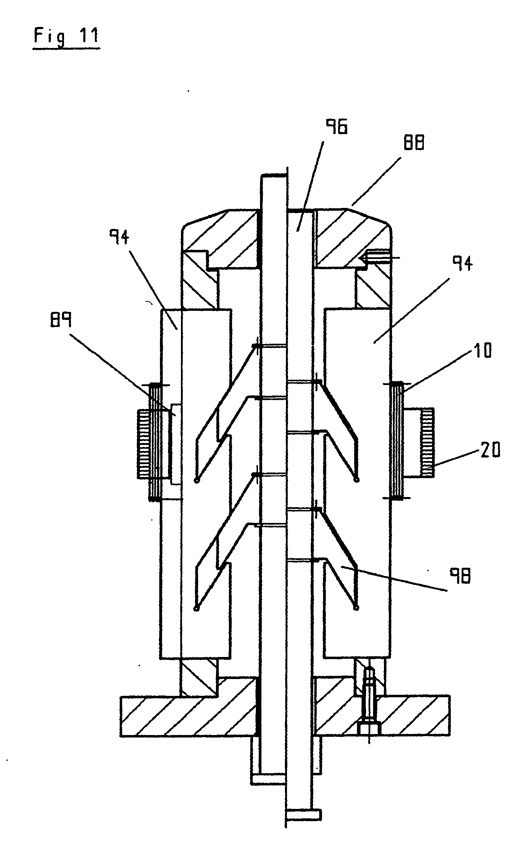

Die Fig. 10 und 11 zeigen einen Teil-Querschnitt des Rotormagazins bzw. Übertragungswerkzeugs 88 in größerem Maßstab sowie dessen Längsschnitt während des radialen Einschiebens der Wellenwicklungen 10 in die radial innen offenen Nuten 18 eines Statorblechpakets 20. Für diesen Übertragungsvorgang wird das Statorblechpaket 20 in derjenigen Drehstellung axial auf das Übertragungswerkzeug 88 gesetzt oder dieses in die Bohrung des Stators 20 eingeschoben, daß die radial innen offenen Nuten 18 mit den radial außen offenen Nuten des Übertragungswerkzeugs 88 fluchten. Dann werden die in den Nuten des letzteren sitzenden Wellenwicklungen durch radial weiter innen in denselben Nuten sitzende, lamellenförmige Schieber 94 radial nach außen in die Nuten 18 des Statorblechpakets 20 verdrängt. Fig. 10 zeigt beispielhaft eine Nut 18, in die bereits bei einem früheren Übertragungsvorgang vier Drahtlagen von Wellenwicklungen eingeschoben worden sind, während vier weitere Drahtlagen von Wellenwicklungen noch in der entsprechenden Nut 89 des Übertragungswerkzeugs 88 sitzen und im nächsten übertragungsvorgang durch den zugehörigen Schieber 94 radial nach außen in die fluchtende Statornut geschoben werden müssen. Eine andere im Querschnitt rechteckige Statornut ist bereits durch acht Drahtlagen von im Querschnitt passenden Wellenwicklungen vollständig gefüllt.

Es gibt verschiedene Möglichkeiten, um durch Kraftzylinder oder Schraubgetriebe die Schieber 94 radial auszufahren und zurückzuziehen. Ein einfaches Ausführungsbeispiel ist in Fig. 11 gezeigt. Es hat lamellenartige Schieber 94, die in den radial außen offenen Nuten des Übertragungswerkzeugs 88 radial verschieblich geführt aber axial fixiert sind. Um sie radial zu bewegen, verschiebt ein Kraftzylinder oder anderer Antrieb eine zentrale Antriebsstange 96, an der konische oder Keilscheiben 98 fest angebracht sind, deren sich schräg zur Längsachse erstreckende vordere und hintere parallele Keilflächen in entsprechend schräg angeordnete Ausnehmungen in den lamellenförmigen Schiebern 94 eingreifen. Somit führt eine Bewegung der Antriebsstange 96 mit Bezug auf Fig. 11 nach oben zum radialen Ausspreizen der Schieber 94 und dadurch zum Verdrängen der in den Nuten 89 des Übertragungswerkzeugs 88 sitzenden Wellenwicklungen in die Statornuten 18. Durch Rückzug der Antriebsstange 96 nach unten werden nach dem Übertragungsvorgang die Schieber 94 wieder radial nach innen gezogen.

Alternativ zu den Scheiben 46, 48 könnten auch Stangen entsprechend Scheiben mit unendlich großem Durchmesser mit darauf angebrachten Formvorsprüngen 50 oder, analog zu der erwähnten Rolle, eine Stange mit zwei Reihen querverschieblicher Formvorsprünge 50 im Zusammenwirken mit einem Drahtführer 54 die Formeinrichtung für bandförmige Wellenwicklungen 10 bilden. Bei dieser Ausführungsform könnten alle übrigen vorstehend beschriebenen Teile und Maßnahmen unverändert bleiben bzw. sinngemäß übernommen werden

## Patentansprüche

1. Verfahren zum Formen und Einführen von Wellenwicklungen mit durch giebelförmige Wicklungsköpfe verbundenen Stegabschnitten in Rotor- oder Statorblechpakete elektrischer Maschinen, wobei in einem Arbeitsschritt jeweils mehrere Wellenwicklungen (10) mit einer bestimmten Anzahl Wellen in einen stabförmigen Aufnehmer (22) eingelegt und mit diesem im wesentlichen tangential an ein Rotorblechpaket mit radial außen offenen Nuten herangeführt und während einer Drehbewegung des Rotorblechpakets und einer dessen Umfangsgeschwindigkeit entsprechenden, im wesentlichen tangentialen Relativbewegung der bandförmigen Wellenwicklungen (10) deren Stegabschnitte (12) in die Nuten des Rotorblechpakets gedrückt werden, **dadurch gekennzeichnet, daß** die Wellenwicklungen (10) von einem fortlaufend geformten Wellenwicklungsband (52) abgeschnitten werden und vor ihrem Einbringen in den stabförmigen Aufnehmer (22) eine Giebelhälfte der giebelförmigen Wicklungsköpfe (14) wenigstens teilweise durch plastische Verformung aus der Ebene der an die Wicklungsköpfe (14) angrenzenden Stegabschnitte (12) herausgedrückt wird, und daß die Stegabschnitte (12) der in dem stabförmigen Aufnehmer (22) aufgenommenen Wellenwicklungen (10) wahlweise auch in radial außen offene Nuten (89) eines Statorblechpakets oder eines rotorähnlichen Übertragungswerkzeugs (88) gedrückt werden.

2. Verfahren nach Anspruch 1, **dadurch gekennzeichnet, daß** nach der Aufnahme der Wellenwicklungen (10) das Übertragungswerkzeug (88) in das Blechpaket (20) eines Stators oder Rotors mit radial innen offenen Nuten (18) eingesetzt und die Wellenwicklungen (10) aus den Nuten (89) des Übertragungswerkzeugs (88) radial in die Nuten (18) des Blechpakets (20) verdrängt werden.

3. Verfahren nach Anspruch 1, **dadurch gekennzeichnet, dass** eine bestimmte Anzahl von Wellenwicklungen (10) einzeln nacheinander derart in aufeinander folgende Quernuten des stabförmigen Aufnehmers (22) eingeführt wird, dass ihre Stegabschnitte (12) in den Quernuten in derselben Drahtlage liegen.

4. Verfahren nach einem der Ansprüche 1 bis 3, **dadurch gekennzeichnet, daß** die Wellenwicklungen (10) so lang sind, daß sie während mehrerer Umdrehungen des Rotor- oder Statorblechpakets oder des rotorähnlichen Übertragungswerkzeugs (88) mit radial außen offenen Nuten (89) in diese Nuten (89) einzuführen sind.

5. Verfahren nach Anspruch 3 oder 4, **dadurch gekennzeichnet, daß** die Wellenwicklungen (10) jeweils einstückig mehrlagig in den stabförmigen Aufnehmer (22) eingelegt werden.

6. Verfahren nach einem der Ansprüche 2 bis 5, **dadurch gekennzeichnet, daß** nach dem Einführen mehrerer Wellenwicklungen (10) in das Blechpaket (20) eines Stators oder Rotors mit radial innen offenen Nuten (18) die stirnseitig aus dem Blechpaket (20) vorstehenden Wicklungsköpfe (14) der Wellenwicklungen (10) weiter radial nach außen verdrängt und dann weitere Wellenwicklungen (10) in diese Nuten (18) eingeführt werden.

7. Verfahren nach Anspruch 6, **dadurch gekennzeichnet, daß** die im ersten Schritt in die Nuten (18) des Blechpakets (20) eingeschobenen Wellenwicklungen (10) mit breiteren Wicklungsköpfen (14) geformt werden als die im zweiten Schritt eingeführten Wellenwicklungen (10).

8. Verfahren nach Anspruch 7, **dadurch gekennzeichnet, daß** die im zweiten Schritt in die Nuten (18) des Blechpakets (20) eingeschobenen Wellenwicklungen (10) mit höheren Wicklungsköpfen (14) geformt werden als die im ersten Schritt eingeführten Wellenwicklungen (10).

9. Verfahren nach einem der vorhergehenden Ansprüche, **dadurch gekennzeichnet, daß** das Wellenwicklungsband (52) aus im Querschnitt rechteckigem oder rundem Wicklungsdraht (56) geformt wird, der beim Formvorgang von einem Drahtführer (54) abwechselnd um die äußeren Seitenflächen von auf dem Umfang von zwei axial nebeneinander rotierend antreibbaren Scheiben (46, 48) oder in zwei Reihen auf dem Umfang einer rotierend antreibbaren Rolle gegeneinander versetzt angeordneten Formvorsprüngen (50) gelegt wird, wobei in dem Winkelbereich, in dem das Wellenwicklungsband (52) auf dem Umfang der Scheiben (46, 48) bzw. Rolle mitgenommen wird, der Abstand zwischen einem Formvorsprung (50) der einen Reihe und dem folgenden Formvorsprung (50) der anderen Reihe um ein solches Maß vergrößert wird, daß die äußeren Seitenflächen der Formvorsprünge (50) die Wicklungsköpfe (14) der Wellenwicklungen (10) formen.

10. Verfahren nach Anspruch 9, **dadurch gekennzeichnet, daß** der Wicklungsdraht (56) bei jedem Formvorgang durch Andruck wenigstens eines an einem rotierend antreibbaren Träger (55) angebrachten Mitnehmerzapfens (58, 60) gegen den Drahtumfang und dabei ausgeübte Querkräfte als Schlaufe um einen Formvorsprung (50) der einen Reihe und als weitere Schlaufe um den Mitnehmerzapfen (58, 60) gebogen und diese auf einen Formvorsprung (50) der anderen Reihe abgestreift wird.

11. Verfahren nach Anspruch 9 oder 10, **dadurch gekennzeichnet, daß** zum Ende des Winkelbereichs hin, in dem das Wellenwicklungsband (52) auf dem Umfang der Scheiben (46, 48) bzw. Rolle mitgenommen wird, durch Verkleinerung des Abstands zwischen den beiden Reihen von Formvorsprüngen (50) die Spannung im Wicklungsdraht (56) wieder abgebaut wird.

12. Verfahren nach einem der Ansprüche 9 bis 11, **dadurch gekennzeichnet, daß** das Wellenwicklungsband (52) wenigstens zwischen zwei Formstationen (24, 28) und/oder Montagestationen als lose Schlaufe (74) geführt wird, die unterschiedliche Fördergeschwindigkeiten in den beiden Stationen (24, 28) ausgleicht.

13. Verfahren nach einem der Ansprüche 9 bis 12, **dadurch gekennzeichnet, daß** die an die Schnittstellen des Wicklungsdrahts (56) angrenzenden Wellen aufgebogen und zu Anschlußenden (16) der Wellenwicklungen (10) geformt werden.

14. Vorrichtung zur Durchführung des Verfahrens nach einem der Ansprüche 1 bis 13, mit einer Formeinrichtung (24) zur Formung von Wellenwicklungen (52) und einer Einrichtung (22, 88 - 92) zum Einführen der Wellenwicklungen (10) in radial außen offene Nuten (89) eines Rotorblechpakets, bestehend aus einem stabförmigen Aufnehmer (22) für die Wellenwicklungen (10), der mit Bezug auf ein durch einen Drehantrieb rotierend antreibbares Rotorblechpaket mit radial außen offenen Nuten im wesentlichen tangential angeordet ist, einem Antrieb zum relativen Vorschub des stabförmigen Aufnehmers (22) mit darin aufgenommenen Wellenwicklungen (10) mit ihren durch giebelförmige Wicklungsköpfe (14) verbundenen Stegabschnitten (12) und/oder des Rotorblechpakets längs einer Führung mit einer der Umfangsgeschwindigkeit des Rotorblechpakets entsprechenden Geschwindigkeit und Leit- oder Schuborganen (90, 92), durch welche die an das Rotorblechpaket herangeführten Stegabschnitte (12) der Wellenwicklungen (10) nacheinander aus dem stabförmigen Aufnehmer (22) verdrängbar und in die radial außen offenen Nuten des Rotorblechpakets einführbar sind, **dadurch gekennzeichnet, daß** zwischen der Formeinrichtung (24) und einer Ladestation (30) zum Einlegen der Wellenwicklungen (10) in den stabförmigen Aufnehmer (22) eine Prägeeinrichtung (28) angeordnet ist, die ein der Wellenwicklung (10) angepaßtes Fördermittel (76), z.B. einen endlos umlaufend geführten, positionsgenau steuerbaren Transportriemen mit auf der Außenseite im Abstand der Stegabschnitte (12) angebrachten Mitnehmern (78), sowie seitlich neben dem Fördermittel (76, 78) ein oder mehrere Stempel (82) und Matrizen (84) aufweist, durch die wenigstens ein Teil mindestens eines Wicklungskopfs (14) einer in den Aufnehmer (22) einzulegenden Wellenwicklung (10) aus der Ebene der angrenzenden Stegabschnitte (12) herauszudrücken ist, und dass die in den stabförmigen Aufnehmer (22) eingelegten Stegabschnitte (12) der Wellenwicklungen (10) wahlweise auch in radial außen offene Nuten (89) eines Statorblechpakets oder eines rotorähnlichen Übertragungswerkzeugs (88) einführbar sind.

15. Vorrichtung nach Anspruch 14, **dadurch gekennzeichnet, daß** die Führung einen in Längsrichtung verfahrbaren, stabförmigen Aufnehmer (22) mit parallelen Quernuten aufweist, in welche mehrere in einem Arbeitsschritt gemeinsam in das Blechpaket oder Übertragungswerkzeug (88) einzuführende Wellenwicklungen (10) mit ihren Stegabschnitten (12) in der vorbestimmten Relativstellung einlegbar sind.

16. Vorrichtung nach Anspruch 15, **gekennzeichnet durch** ortsfest angeordnete, an den äußeren Bereichen der Stegabschnitte (12) und/oder den Wicklungsköpfen (14) der Wellenwicklungen (10) angreifende Leitorgane (90, 92), **durch** welche diese in die radial außen offenen Nuten (89) des Blechpakets oder Übertragungswerkzeugs (88) verdrängbar sind, während es um eine ortsfeste Achse rotiert und sich dabei an dem tangential vorbeigeführten stabförmigen Aufnehmer (22) abwälzt.

17. Vorrichtung nach einem der Ansprüche 14 bis 16, **dadurch gekennzeichnet, daß** das rotorähnliche Übertragungswerkzeug (88) in den radial außen offenen Nuten (89) radial verschieblich geführte, bis über den Außenumfang ausfahrbare Schieber (94) aufweist, durch welche in den Nuten (89) aufgenommene Wellenwicklungen (10) in fluchtende, radial innen offene Nuten (18) eines zur Übertragung konzentrisch angeordneten Rotor- oder Statorblechpakets (20) verdrängbar sind.

18. Vorrichtung nach Anspruch 17, **dadurch gekennzeichnet, daß** die axial fixierten Schieber (94) mit Keilflächen versehen und durch entsprechende Keil- oder Konusfläche (98) eines gemeinsamen, axial bewegbaren Antriebsglieds (96) radial verfahrbar sind.

19. Vorrichtung nach einem der Ansprüche 15 bis 18, **dadurch gekennzeichnet, daß** eine Ladestation (30) zum Einlegen der Wellenwicklungen (10) in stabförmige Aufnehmer (22) bewegbar gelagerte, sich parallel zueinander und zu dem Aufnehmer (22), in Projektion neben diesem erstreckende Führungsschienen (86) aufweist, welche die Wicklungsköpfe (14) der Wellenwicklungen (10) führen, sowie weiterhin einen endlos umlaufend geführten, positionsgenau steuerbaren Transportriemen (76) mit auf seiner Außenseite im Abstand der Stegabschnitte (12) angebrachten Mitnehmern (78) und einen Stellantrieb zur Bewegung der Führungsschienen aus einer Position vor den Nuteingängen des stabförmigen Aufnehmers (22) in eine Position neben diesem, wobei die Stegabschnitte (12) der Wellenwicklungen (10) in die Nuten des Aufnehmers (22) einführbar sind.

20. Vorrichtung nach einem der Ansprüche 14 bis 19, **dadurch gekennzeichnet, daß** die Formeinrichtung (24) für die Wellenwicklungen (10) zwei Scheiben (46, 48) oder eine Rolle und zwei Reihen gleichmäßig über den Umfang verteilte, relativ zur jeweils anderen Reihe versetzt zueinander angeordnete, über den Scheiben- bzw. Rollenumfang vorstehende Formvorsprünge (50) und einen derart geführten Drahtführer (54) aufweist, daß ein Wicklungsdraht (56) wellenförmig abwechselnd um die äußeren Seitenflächen der am Umfang aufeinander folgenden Formvorsprünge (50) legbar ist, deren Form der zu erzeugenden Form der Wicklungsköpfe (14) der Wellenwicklungen (10) entspricht.

21. Vorrichtung nach Anspruch 20, **dadurch gekennzeichnet, daß** der am Umfang zwischen einem Formvorsprung (50) der einen Reihe und dem folgenden Formvorsprung (50) der anderen Reihe gemessene freie Abstand der Stärke des Wicklungsdrahts (56) entspricht.

22. Vorrichtung nach Anspruch 20 oder 21, **dadurch gekennzeichnet, daß** die voneinander weg weisenden Seitenflächen der Formvorsprünge (50) in der Draufsicht auf den Scheiben- bzw. Rollenumfang jeweils die Form eines Giebels haben.

23. Vorrichtung nach einem der Ansprüche 20 bis 22, **dadurch gekennzeichnet, daß** auf dem Umfangsabschnitt, den eine wellenwicklung (10) auf den Scheiben (46, 48) bzw. der Rolle zurücklegt, der axiale Abstand zwischen einem Formvorsprung (50) der einen Reihe und dem folgenden Formvorsprung (50) der anderen Reihe erst vergrößerbar und dann verringerbar ist.

24. Vorrichtung nach Anspruch 23, **dadurch gekennzeichnet, daß** jede Reihe Formvorsprünge (50) an einer einzeln derart taumelnd oder schräg gelagerten Scheibe (46, 48) angebracht ist, daß sich der Abstand zwischen den beiden Reihen auf dem von einer Wellenwicklung (10) zurückgelegten Umfangsabschnitt erst vergrößert und dann verringert, wobei durch die Abstandsvergrößerung der straff gegen die giebelförmigen Außenflächen der Formvorsprünge (50) gezogene Wicklungsdraht (56) mit entsprechenden giebelförmigen Wicklungsköpfen (14) formbar ist.

25. Vorrichtung nach einem der Ansprüche 20 bis 24, **dadurch gekennzeichnet, daß** der Drahtführer (54) ein um eine im wesentlichen quer zur Drehachse der Scheiben (46, 48) bzw. Rolle liegende Drehachse rotierend antreibbarer Träger (55) mit wenigstens einem exzentrischen Mitnehmerzapfen (58, 60) und einem im wesentlichen auf der Drehachse angeordneten, gesteuert axial vorschiebbaren Stößel (64) ist, wobei der Träger (55) mit dem oder den Mitnehmerzapfen (58, 60) unmittelbar neben den Scheiben (46, 48) bzw. der Rolle in zeitlicher Abstimmung mit deren Drehbewegung umläuft und in einer ersten Zwischenphase eines Arbeitszyklus der Stößel (64) gegen den in den Raum zwischen den Träger (55) und die Scheiben (46, 48) bzw. Rolle zugeführten Wicklungsdraht (56) und einen Formvorsprung (50) der einen Reihe vorschiebbar ist, so daß der Wicklungsdraht (56) auf diesem Formvorsprung (50) zur Bildung einer ersten Schlaufe gehalten ist, und in einer zweiten Zwischenphase, in der sich axial vor einem Mitnehmerzapfen (58, 60) ein Formvorsprung (50) der anderen Reihe befindet, ein Abstreifer (72) betätigbar ist, durch den eine aus dem Wicklungsdraht (56) auf dem Mitnehmerzapfen (58, 60) gebildete zweite Schlaufe von dem Mitnehmerzapfen (58, 60) auf den vor ihm befindlichen Formvorsprung (50) abstreifbar ist.

26. Vorrichtung nach Anspruch 25, **dadurch gekennzeichnet, daß** der Träger (55) in derjenigen Drehrichtung umläuft, in welcher der mit seiner Umfangsfläche gegen den Wicklungsdraht (56) bewegte Mitnehmerzapfen (58, 60) die erste Schlaufe um einen Formvorsprung (50) der einen Reihe und gleichzeitig die zweite Schlaufe um sich selbst bildet.

27. Vorrichtung nach Anspruch 25 oder 26, **dadurch gekennzeichnet, daß** der Träger (55) des wenigstens einen Mitnehmerzapfens (58, 60) ungleichmäßig umläuft, z.B. durch einen Malteserkreuzantrieb angetrieben ist.

28. Vorrichtung nach einem der Ansprüche 25 bis 27, **dadurch gekennzeichnet, daß** zur Veränderung der Höhe der Wellenwicklungen (10) entsprechend unterschiedlichen Blechpakethöhen der maximale axiale Abstand zwischen den beiden Reihen von Formvorsprüngen (50) und die Exzentrizität des oder der Mitnehmerzapfen (58, 60) am Träger (55) veränderlich einstellbar sind.

29. Vorrichtung nach Anspruch 14, **dadurch gekennzeichnet, daß** die Prägeeinrichtung (28) Schneidwerkzeuge zum Ablängen der Wellenwicklungen (10) vom Wellenwicklungsband (52) aufweist.

30. Vorrichtung nach Anspruch 14, **dadurch gekennzeichnet, daß** zwischen der Formeinrichtung (24) und der Prägeeinrichtung (28) eine lose Führung (80) für das geformte Wellenwicklungsband (52) vorhanden ist, so daß durch dieses eine als Pufferspeicher dienende Schlaufe (74) veränderlicher Länge zu bilden ist.

## Claims

1. A method for forming and introducing wave windings with web portions, connected by gable-shaped winding heads, in rotor or stator lamination packets of electrical machines, wherein in one working step several wave windings (10) with a certain number of waves are placed in a rod-shaped receiver (22) and are brought with it essentially tangentially to a rotor lamination packet with radially outwardly open slots and with the web portions (12) of the bandlike wave windings (10) are pressed into the slots of the rotor lamination packet during a rotary motion of the rotor lamination packet and a substantially tangential relative motion of the bandlike wave windings (10) at a speed corresponding to the circumferential speed of the rotor lamination packet, **characterised in that** the wave windings (10) are cut from a continuously formed wave winding band (52), that one half of the gable-shaped windings heads (14) by plastic deformation is at least partly forced out of the plane of the web portions (12) bordering on the winding heads (14) before the wave windings (10) are placed in the rod-shaped receiver (22), and that the web portions (12) of the wave windings (10) received in the rod-shaped receiver (22) selectively are also pressed into radially outwardly open slots (89) of a stator lamination packet or a rotorlike transfer tool (89).

2. The method of claim 1, **characterized in that** after the reception of the wave windings (10) the transfer tool (88) is inserted into the lamination packet (20) of a stator or rotor having radially inwardly open slots (18), and the wave windings (10) are positively displaced out of the slots (89) of the transfer tool (88) radially into the slots (18) of the lamination packet (20).

3. The method of claim 1, **characterized in that** a certain number of wave windings (10) are placed separately, one after the other into consecutive transverse slots of the rod-shaped receiver (22) in such way that their web portions (12) are positioned in the transverse slots in the same wire layer.

4. The method of one of claims 1 to 3, **characterized in that** the wave windings (10) are so long that they are introduced during multiple revolutions of the rotor or stator lamination packet or the rotorlike transfer tool (88) into its radially outwardly open slots (89).

5. The method of claim 3 or 4, **characterized in that** the wave windings (10) are placed in multiple layers, each in one piece, into the rod-shaped receiver (22).

6. The method of one of claims 2 to 5, **characterized in that** after the introduction of a plurality of wave windings (10) into the lamination packet (20) of a stator or rotor having radially inwardly open slots (18), the winding heads (14), protruding on the face end from the lamination packet (20), of the wave windings (10) are positively displaced farther outward radially, and then further wave windings (10) are introduced into these slots (18).

7. The method of claim 6, **characterized in that** the wave windings (10) thrust into the slots (18) of the lamination packet (20) in the first step are formed with wider winding heads (14) than the wave windings (10) introduced in the second step.

8. The method of claim 7, **characterized in that** the wave windings (10) thrust into the slots (18) of the lamination packet (20) in the second step are formed with taller winding heads (14) than the wave windings (10) introduced in the first step.

9. The method of one of the foregoing claims, **characterized in that** the wave winding band (52) is formed of winding wire (56) of rectangular or round cross section, which in the forming operation by a wire guide (54) is laid in alternation around the outer side faces of forming protrusions (50), offset from one another on the circumference of two disks (46, 48) which can be driven to rotate axially side by side or in two rows on the circumference of a roller that can be driven to rotate, and that in the angular range in which the wave winding band (52) is driven on the circumference of the disks (46, 48) or roller, the spacing between one forming protrusion (50) of one row and the next forming protrusion (50) in the other row is increased by such an amount that the outer side faces of the forming protrusions (50) form the winding heads (14) of the wave windings (10).

10. The method of claim 9, **characterized in that** in each forming operation, by contact pressure and transverse forces exerted against the circumference of the wire by at least one looping peg (58, 60) mounted on a carrier (55) that can be driven to rotate, the winding wire (56) is bent as a loop around a forming protrusion (50) of one row and as a further loop around the looping peg (58, 60), whereafter the latter loop is stripped off onto a forming protrusion (50) of the other row.

11. The method of claim 9 or 10, **characterized in that** toward the end of the angular range within which the wave winding band (52) is carried along on the circumference of the disks (46, 48) or roller, the tension in the winding wire (56) is reduced again by means of reducing the spacing between the two rows of forming protrusions (50).

12. The method of one of claims 9 to 11, **characterized in that** the wave winding band (52), at least between two forming stations (24, 28) and/or assembly stations, is guided as a loose loop (74), which compensates for different feeding speeds in the two stations (24, 28).

13. The method of one of claims 9 to 12, **characterized in that** the waves adjoining the intersections of the winding wire (56) are bent open and formed into connection ends (16) of the wave windings (10).

14. An apparatus for executing the method of one of claims 1 to 13, having a forming device (24) for forming wave windings (52) and a device (22, 88 - 92) for introducing the wave windings (10) into radially outwardly open slots (89) of a rotor lamination packet, comprising a rod-shaped receiver (22) for the wave windings (10) which in relation to a rotatably drivable rotor lamination packet having radially outwardly open slots is arranged substantially tangentially, a drive for relative advancement of the rod-shaped receiver (22) and the wave winding (10) with their web portions (12) connected by gable-shaped winding heads (14) received therein and/or of the rotor lamination packet along a guide at a speed corresponding to the circumferential speed of the rotor lamination packet, and guide or thrust elements (90, 92), by which the web portions (12) of the wave windings (10) brought to the rotor lamination packet are positively displaced out of the rod-shaped receiver (22) and introduced into the radially outwardly open slots of the rotor lamination packet in succession, **characterised in that** a stamping device (28) is disposed between the forming device (24) and a loading station (30) for placing the wave windings (10) in the rod-shaped receiver (22), which stamping device has a conveyor means (76) adapted to the wave winding (10), such as an endlessly revolving conveyor belt that can be controlled with precise positioning, with drivers (78) mounted on the outside at the spacing of the web portions (12), and also has one or more male dies (82) and female dies (84) laterally beside the conveyor belt (76), by which dies at least part of one winding head (14) of a wave winding (10) to be placed in the receiver (22) can be forced out of the plane of the adjacent web portions (12) and that the web portions (12) of the wave windings (10) placed in the rod-shaped receiver (22) selectively are also introduceable into radially outwardly open slots (89) of a stator lamination packet or a rotorlike transfer tool (88).

15. The apparatus of claim 14, **characterized in that** the guide has a longitudinally movable rod-shaped receiver (22) with parallel transverse slots, into which a plurality of wave windings (10), to be introduced jointly into a lamination packet or transfer tool (88) in one work step, can be placed with their web portions (12) in the predetermined relative position.

16. The apparatus of claim 15, **characterized by** stationary guide devices (90, 92), engaging the outer regions of the web portions (12) and/or the winding heads (14) of the wave windings (10), by which guide devices the web portions can be positively displaced into the radially outwardly open slots (89) of the lamination packet or transfer tool (88) while the lamination packet or transfer tool rotates about a stationary axis and in the process rolls along the rod-shaped receiver (22) moved past it at a tangent.

17. The apparatus of one of claims 14 to 16, **characterized in that** the rotorlike transfer tool (88) in the radially outwardly open slots (89) has radially displaceably guided slides (94) which can be extended to beyond the outer circumference and by which wave windings (10) received in the slots (89) can be positively displaced into aligned, radially inwardly open slot (18) of a rotor or stator lamination packet (20) disposed concentrically for the transfer.

18. The apparatus of claim 17, **characterized in that** the axially fixed slides (94) are provided with wedge-shaped faces and are movable radially by means of corresponding wedge-shaped or conical faces (98) of a common, axially movable drive member (96).

19. The apparatus of one of claims 15 to 18, **characterized in that** a loading station (30) for placing the wave windings (10) in rod-shaped receivers (22) has movably supported guide rails (86), extending parallel to one another and to the receiver (22) and extending in projection at the sides of the receiver, which rails guide the winding heads (14) of the wave windings (10), and further an endlessly revolvingly guided conveyor belt (76), which can be controlled with precise positioning and has drivers (78) provided on its outside with the same spacing as the web portions (12), and a positioning drive mechanism for moving the guide rails out of a position in front of the slot entrances in the rod-shaped receiver (22) into a position at its sides, wherein the web portions (12) of the wave windings (10) can be introduced into the slots of the receiver (22).

20. The apparatus of one of claims 14 to 19, **characterized in that** the forming device (24) for the wave windings (10) has two disks (46, 48) or one roller and two rows of forming protrusions (50), distributed uniformly over the circumference and offset from one another relative to the respectively other row and protruding past the circumference of the disks or roller respectively, and a wire guide (54) guided in such a way that a winding wire (56) can be placed in undulating fashion in alternation about the outer side faces of the successive forming protrusions (50) on the circumference, whose shape corresponds to the shape to be generated of the winding heads (14) of the wave windings (10).

21. The apparatus of claim 20, **characterized in that** the free spacing, measured at the circumference between one forming protrusion (50) of one row and the next forming protrusion (50) in the other row, is equivalent to the thickness of the winding wire (56).

22. The apparatus of claim 20 or 21, **characterized in that** in plan view on the circumference of the disks or roller the side faces, pointing away from one another, of the forming protrusions (50) each have the shape of a gable.

23. The apparatus of one of claims 20 to 22, **characterized in that** along the circumferential length covered by a wave winding (10) on the disks (46, 48) or roller the axial spacing between one forming protrusion (50) of one row and the next farming protrusion (50) of the other row can initially be increased and then reduced.

24. The apparatus of claim 23, **characterized in that** each row of forming protrusions (50) is mounted on a disk (46, 48) that is supported individually in tumbling or oblique fashion such that the spacing between the two rows along the circumferential length covered by a wave winding (10) is initially increased and then reduced, and as a result of the increase in spacing, the winding wire (56), drawn tautly against the gable-shaped outer faces of the forming protrusions (50), is formed with corresponding gable-shaped winding heads (14).

25. The apparatus of one of claims 20 to 24, **characterized in that** the wire guide (54) is a carrier (55) driven to rotate about an axis of rotation located essentially transversely to the axis of rotation of the disks (46, 48) or roller and having at least one eccentric looping peg (58, 60) and one tappet (64) that can be axially advanced in controlled fashion and is disposed essentially on the axis of rotation, the carrier (55) with the looping peg or pegs (58, 60) revolving immediately next to the disks (46, 48) or the roller in chronological adaptation to the rotary motion thereof, and the tappet (64) being moveable forward in a first intermediate phase of a work cycle to the winding wire (56) delivered into the space between the carrier (55) and the disks (46, 48) or roller and to a forming protrusion (50) of one row, so that the winding wire (56) is retained on this forming protrusion (50) to form a first loop, whereas in a second intermediate phase, in which a forming protrusion (50) of the other row is located axially in front of a looping peg (58, 60), a stripper (72) can be actuated, by which a second loop, formed from the winding wire (56) on the looping peg (58, 60), can be stripped from the looping peg (58, 60) onto the forming protrusion (50) located in front of it.

26. The apparatus of claim 25, **characterized in that** the carrier (55) revolves **in that** direction of rotation in which the looping peg (58, 60), moved with its circumferential surface against the winding wire (56), forms the first loop around a forming protrusion (50) of one row and simultaneously forms the second loop around itself.

27. The apparatus of claim 25 to 26, **characterized in that** the carrier (55) of the at least one looping peg (58, 60) revolves discontinuously, for instance being driven by a Maltese-cross drive mechanism.

28. The apparatus of one of claims 25 to 27, **characterized in that** for varying the height of the wave windings (10) to suit different lamination packet heights, the maximum axial spacing between the two rows of forming protrusions (50) and the eccentricity of the looping peg or pegs (58, 60) on the carrier (55) are variably adjustable.

29. The apparatus of claim 14, **characterized in that** the stamping device (28) has cutting tools for cutting the wave windings (10) to the proper length from the wave winding band (52).

30. The apparatus of claim 14, **characterized in that** between the forming device (24) and the stamping device (28) there is a loose guide (80) for the formed wave winding band (52), so that from the band a loop (74) of variable length serving as a buffer store can be formed.

31. Stator or rotor of an electrical machine, having radially inwardly or outwardly open slots (18; 89) that hold parallel web portions (12) of wave windings (10), which are arranged in each slot (18; 89) in a radial row and are connected by gable-shaped winding heads (14) positioned on the face end outside of the stator or rotor lamination packet (20; 88), **characterized in that** each wire layer in the slots (18; 89) is composed of the web portions (12) of a certain number of wave windings (10) the winding heads (14) of which, progressing in one circumferential direction, cross over and are preformed in such a way that they are partly forced out of the plane of the appertaining web portions (12).

## Revendications

1. Procédé de mise en forme et d'introduction d'enroulements ondulés ayant des segments de branche reliés par des têtes d'enroulement en forme de dièdre, dans des paquets de tôles de stator ou de rotor de machines électriques, selon lequel,
dans une étape on place respectivement plusieurs enroulements ondulés (10) avec un certain nombre d'ondulations dans un récepteur (22) en forme de tige et avec celui-ci on les conduit pratiquement tangentiellement sur un paquet de tôles de rotor ayant des rainures ouvertes radialement vers l'extérieur et pendant le mouvement de rotation du paquet de tôles de rotor et à une vitesse périphérique correspondante, par un mouvement relatif, principalement tangentiel, des enroulements ondulés (10) en forme de bande, on place les segments de branche (12) dans les rainures du paquet de tôles de rotor,
**caractérisé en ce que**
l'on coupe les enroulements ondulés (10) d'un ruban d'enroulements ondulés (52), formés en continu et avant leur introduction dans le récepteur (22) en forme de tige, on déforme une moitié des têtes d'enroulement en forme de dièdre (14), au moins en partie, par déformation plastique hors du plan des segments de branche (12) adjacents aux têtes d'enroulement (14), et
on enfonce les segments de branche (12) des enroulements ondulés (10) reçus dans le récepteur (22) en forme de tige, sélectivement également dans des rainures (89) ouvertes radialement vers l'extérieur d'un paquet de tôles de stator ou d'un outil de transfert (88) analogue à un rotor.

2. Procédé selon la revendication 1,
**caractérisé en ce qu'**
après réception des enroulements ondulés (10), l'outil de transfert (88) est placé dans le paquet de tôles (20) d'un stator ou d'un rotor avec des rainures (18) ouvertes radialement vers l'intérieur et les enroulements ondulés (10) sont repoussés à partir des rainures (89) de l'outil de transfert (88) radialement dans les rainures (18) du paquet de tôles (20).

3. Procédé selon la revendication 1,
**caractérisé en ce qu'**
un certain nombre d'enroulements ondulés (10) sont introduits séparément, successivement dans des rainures transversales qui se suivent du récepteur (22) en forme de tige de façon que leurs segments de branche (12) se placent dans les rainures transversales dans la même position de fil.

4. Procédé selon l'une quelconque des revendications 1 à 3,
**caractérisé en ce que**
les enroulements ondulés (10) ont une longueur telle qu'ils puissent être introduits au cours de plusieurs rotations du paquet de tôles de rotor ou de stator ou d'un outil de transfert (88) analogue à un rotor, à rainures (89) ouvertes radialement vers l'extérieur, dans ces rainures (89).

5. Procédé selon l'une quelconque des revendications 3 ou 4,
**caractérisé en ce que**
les enroulements ondulés (10) sont placés respectivement en une seule pièce en plusieurs couches dans le récepteur (22) en forme de tige.

6. Procédé selon l'une quelconque des revendications 2 à 5,
**caractérisé en ce qu'**
après l'introduction de plusieurs enroulements ondulés (10) dans le paquet de tôles (20) d'un stator ou d'un rotor à rainures (18) ouvertes radialement vers l'intérieur, les têtes d'enroulement (14) qui sont en saillie du côté frontal par rapport au paquet de tôles (20) des enroulements ondulés (10) sont repoussées encore plus radialement vers l'extérieur puis d'autres enroulements ondulés (10) sont introduits dans ces rainures (18).

7. Procédé selon la revendication 6,
**caractérisé en ce que**
les enroulements ondulés (10) introduits dans la première étape dans les rainures (18) du paquet de tôles (20) sont formes avec des têtes d'enroulement plus larges (14) que les enroulements (10) introduits dans la seconde étape.

8. Procédé selon la revendication 7,
**caractérisé en ce que**
les enroulements ondulés (10) introduits au cours de la seconde étape dans les rainures (18) du paquet de tôles (20) sont formés avec des têtes d'enroulement (14) plus hautes que les enroulements ondulés (10) introduits au cours de la première étape.

9. Procédé selon l'une quelconque des revendications précédentes,
**caractérisé en ce que**
la bande d'enroulements ondulés (52) est formée à partir d'un fil de bobinage (56) de section rectangulaire ou ronde, qui, au cours de l'opération de mise en forme, est conduit par un guide fil (54) alternativement autour de la surface latérale extérieure de saillies de formage (50), décalées sur la périphérie de deux disques (46, 48) entraînés en rotation, axialement l'un à côté de l'autre, ou décalées dans deux rangées à la périphérie d'un tambour entraîné en rotation, et
dans la plage angulaire dans laquelle la, bande d'enroulements ondulés (52) est entraînée à la périphérie des disques (46, 48) ou du tambour, la distance entre une saillie de formage (50) d'une rangée et la saillie de formage (50) suivante de l'autre rangée, est augmentée d'une dimension telle que les surfaces latérales extérieures des saillies de formage (50) forment les têtes (14) des enroulements ondulés (10).

10. Procédé selon la revendication 9,
**caractérisé en ce qu'**
à chaque opération de formage, le fil de bobinage (56) est recourbé par au moins l'un des goujons d'entraînement (58, 60) portés par un support (55) entraîné en rotation, contre la périphérie du fil et par les forces transversales ainsi exercées, en une boucle autour d'une saillie de formage (50) d'une rangée et comme autre boucle autour du goujon d'entraînement (58, 60), et celle-ci est repoussée sur la saillie de formage (50) de l'autre rangée.

11. Procédé selon l'une quelconque des revendications 9 ou 10,
**caractérisé en ce qu'**
à la fin de la zone angulaire dans laquelle la bande d'enroulements ondulés (52) est entraînée à la périphérie des disques (46, 48) ou du tambour, on diminue de nouveau la tension induite dans le fil de bobinage (56) par réduction de la distance entre les deux rangées de saillies de formage (50).

12. Procédé selon l'une quelconque des revendications 9 à 11,
**caractérisé en ce qu'**
on guide la bande d'enroulements ondulés (52) au moins entre deux stations de formage (24, 28) et/ou stations de montage sous la forme d'une boucle libre (74) compensant des vitesses de transfert différentes dans les deux stations (24, 28).

13. Procédé selon l'une quelconque des revendications 9 à 12,
**caractérisé en ce que**
les ondulations adjacentes au point de coupe du fil de bobinage (56) sont recourbées dans le sens de l'ouverture et elles sont mises en forme pour les extrémités de raccordement (16) des enroulements ondulés (10).

14. Dispositif pour la mise en oeuvre du procédé selon l'une quelconque des revendications 1 à 13 comportant une installation de formage (24) pour former les enroulements ondulés (52) et une installation (22, 88-92) pour introduire les enroulements ondulés (10) dans des rainures ouvertes radialement vers l'extérieur (89) d'un paquet de tôles de rotor, comprenant un récepteur (22) en forme de tige pour les enroulements ondulés (10), ce récepteur étant installé pratiquement tangentiellement par rapport à un paquet de tôles de rotor entraîné en rotation par un moyen d'entraînement en rotation, et ayant des rainures ouvertes radialement vers l'extérieur, un moyen d'entraînement pour faire avancer de façon relative le récepteur (22) en forme de tige portant les enroulements ondulés (10) avec leurs segments de branche (12) reliés par des têtes d'enroulement (14) en forme de dièdre et/ou le paquet de tôles de rotor le long d'un moyen de guidage, à une vitesse correspondant à la vitesse périphérique du paquet de tôles de rotor, et des organes de guidage et de poussée (90, 92) qui repoussent les segments de branche (12) des enroulements ondulés (10) conduits vers le paquet de tôles de rotor, successivement hors du récepteur (22) en forme de tige pour les introduire dans les rainures ouvertes radialement vers l'extérieur du paquet de tôles de rotor,
**caractérisé en ce qu'**
une installation d'impression (28) est prévue entre l'installatian de formage (24) et un poste de chargement (30) pour placer les enroulements ondulés (10) dans le récepteur (22) en forme de tige, cette installation (28) comportant un moyen de transfert (76) adapté à l'enroulement ondulé (10), par exemple une courroie de transport tournant en continu, commandée de manière précise en position, ayant sur son côté extérieur des organes d'entraînement (78) à la distance des segments de branche (12) ainsi que latéralement à côté du moyen de transfert (76, 68), un ou plusieurs poinçons (82) et des matrices (84) permettant de refouler hors du plan des segments de branche (12) adjacents, au moins une partie d'au moins une tête d'enroulement (14) d'un enroulement ondulé (10) à placer dans l'organe de réception (22), et
les segments de branche (12) des enroulements ondulés (10) déposés dans le récepteur (22) en forme de tige peuvent être aussi introduits, au choix dans des rainures (89) ouvertes radialement vers l'extérieur d'un paquet de tôles de stator ou d'un outil de transfert (88) analogue à un rotor.

15. Dispositif selon la revendication 14,
**caractérisé en ce que**
le moyen de guidage comporte un organe de réception (22) en forme de tige, mobile dans la direction longitudinale et ayant des rainures transversales parallèles, dans lesquelles se placent plusieurs enroulements ondulés (10) introduits au cours d'une opération, en commun dans le paquet de tôles ou l'outil de transfert (88), par leurs segments de branche (12), dans une position relative prédéfinie.

16. Dispositif selon la revendication 15,
**caractérisé par**
des organes de guidage (90, 92), installés de manière fixe et coopérant avec les zones extérieures des segments de branche (12) et/ou les têtes (14) des enroulements ondulés (10), et qui refoulent ces enroulements ondulés dans les rainures ouvertes radialement vers l'extérieur (89) du paquet de tôles ou de l'outil de transfert (88) alors qu'il tourne autour d'un axe fixe et s'enroule ainsi sur l'organe de réception (22) en forme de tige en passant suivant un mouvement tangentiel.

17. Dispositif selon l'une quelconque des revendications 14 à 16,
**caractérisé en ce que**
l'outil de transfert (88) analogue à un rotor comporte des tiroirs (94) guidés en coulissement radial dans les rainures (89) ouvertes radialement vers l'extérieur, jusqu'au-delâ de la périphérie extérieure pour refouler les enroulements ondulés (10) logés dans les rainures (89), dans des rainures (18) ouvertes radialement vers l'intérieur, alignées, appartenant à un paquet de tôles de rotor ou de stator (20), installé en position concentrique pour le transfert.

18. Dispositif selon la revendication 17,
**caractérisé en ce que**
les tiroirs (94) fixés axialement, comportent des surfaces en forme de coin et sont déplacés radialement par des surfaces en forme de coin ou de cône (98) correspondantes d'un organe d'entraînement (96) commun, mobile axialement.

19. Dispositif selon l'une quelconque des revendications 15 à 18,
**caractérisé par**
un poste de chargement (30) pour placer les enroulements ondulés (10) dans le récepteur (22) en forme de tige, ce poste comportant des rails de guidage (86) monté mobiles, parallèles entre eux et parallèles à l'organe de réception (22) et s'étendant en projection à côté de celui-ci, ces rails guidant les têtes (14) des enroulements ondulés (10), et en outre, une courroie de transport (76), continue, guidée de manière périphérique, commandée de façon précise en position, et dont le côté extérieur comporte des organes d'entraînement (78) prévus à la distance des segments de branche (12) ainsi qu'un organe d'entraînement de réglage pour déplacer les rails de guidage d'une position devant l'entrée des rainures du récepteur (22) en forme de tige dans une position à côté de celui-ci, en quelle position les segments de branche (12) des enroulements ondulés (10) sont introduits dans les rainures de l'organe de réception (22).

20. Dispositif selon l'une quelconque des revendications 14 à 19,
**caractérisé en ce que**
l'installation de formage (24) des enroulements ondulés (10) comporte deux disques (46, 48) ou un tambour et deux rangées de saillies de formage (50) réparties régulièrement à la périphérie, décalées de manière relative d'une rangée à l'autre et venant en saillie par rapport à la périphérie des disques ou du tambour, , et un guide de fil (54) guidé de façon qu'un fil de bobinage (56) soit placé selon une forme ondulée, alternativement autour des surfaces latérales extérieures des saillies de formage (50) qui se suivent successivement à la périphérie et dont la forme correspond à la forme des têtes d'enroulement (14) à réaliser pour les enroulements ondulés (10).

21. Dispositif selon la revendication 20,
**caractérisé en ce que**
la distance libre mesurée à la périphérie entre une saillie de formage (50) d'une rangée et la saillie de formage (50) suivante de l'autre rangée correspond à l'épaisseur du fil de bobinage (56).

22. Dispositif selon l'une quelconque des revendications 20 ou 21,
**caractérisé en ce que**
les surfaces latérales non tournées l'une vers l'autre des saillies (50) ont chacune la forme d'un dièdre en vue de dessus de la périphérie des disques ou du tambour.

23. Dispositif selon l'une quelconque des revendications 20 à 22,
**caractérisé en ce que**
sur le segment périphérique parcouru par un enroulement ondulé (10) sur le disque (46, 48) ou le tambour, la distance axiale entre une saillie de formage (50) d'une rangée et la saillie de formage suivante (50) de l'autre rangée puisse d'abord être agrandie, puis être réduite.

24. Dispositif selon la revendication 23,
**caractérisé en ce que**
chaque rangée de saillies de formage (50) est prévue sur un unique disque (46, 48) monté en nutation ou en biais pour que la distance entre les deux rangées sur le segment périphérique parcouru par l'enroulement ondulé (10) s'agrandisse d'abord puis se réduise et l'augmentation de la distance permet de former le fil de bobinage (56) tendu contre la surface extérieure en forme de dièdre des saillies de formage (50) avec des têtes d'enroulement (14) en forme de dièdre, correspondantes.

25. Dispositif selon l'une quelconque des revendications 20 à 24,
**caractérisé en ce que**
le guide de fil (54) est un support (55) entraînée en rotation autour d'un axe essentiellement transversal à l'axe de rotation des disques (46, 48) ou de l'axe de rotation d'un tambour,
ayant au moins un goujon d'entraînement (58, 60) excentré et un poussoir (64) qui peut avancer axialement de façon commandée principalement installé sur l'axe de rotation,
le support (55) tournant avec le ou les goujons d'entraînement (58, 60), directement à côté des disques (46, 48) ou du tambour, en synchronisme avec leur mouvement de rotation, et dans une première phase intermédiaire d'un cycle de travail, le poussoir (64) est avancé contre le fil de bobinage (56), guidé dans l'espace entre le support (55) et les disques (46, 48) ou le tambour, et une saillie de formage (50) d'une rangée de façon que le fil de bobinage (56) soit tenu sur cette saillie de formage (50) pour former une première boucle et dans une seconde phase intermédiaire, dans laquelle une saillie de formage (50) de l'autre rangée se trouve axialement devant un goujon d'entraînement (58, 60), un organe de raclage (72) est actionné pour refouler une seconde boucle formée avec le fil de bobinage (56) sur le goujon d'entraînement (58, 60), à partir du goujon d'entraînement (58, 60) sur la saillie de formage (50) qui se trouve devant celui-ci.

26. Dispositif selon la revendication 25,
**caractérisé en ce que**
le support (55) tourne dans le sens de rotation dans lequel le goujon d'entraînement (58, 60) déplacé avec sa surface périphérique contre le fil de bobinage (56), forme la première boucle autour d'une saillie de formage (50) d'une rangée et en même temps la seconde boucle autour de lui-même.

27. Dispositif selon l'une quelconque des revendications 25 ou 26,
**caractérisé en ce que**
le support (55) d'au moins un goujon d'entraînement (58, 60) tourne de façon irrégulière, par exemple par un entraînement par une Croix de Malte.

28. Dispositif selon l'une quelconque des revendications 25 à 27,
**caractérisé en ce que**
pour modifier la hauteur des enroulements ondulés (10) en fonction de hauteurs de paquets de tôles différentes, on règle de manière variable la distance axiale maximale, entre les deux rangées de saillies de forage (50) et l'excentricité du ou des goujons d'entraînement (58, 60) du support (55).

29. Dispositif selon la revendication 14,
**caractérisé en ce que**
l'installation d'impression (28) comporte des outils de coupe pour couper à la longueur les enroulements ondulés (10) de la bande d'enroulements ondulés (52).

30. Dispositif selon la revendication 14,
**caractérisé par**
un guidage libre (80) entre l'installation de formage (24) et l'installation d'impression (28) pour la bande d'enroulements ondulés (52), mise en forme, de façon à constituer une boucle (74) de longueur variable servant d'accumulateur tampon.

31. Stator ou rotor d'une machine électrique ayant des rainures radiales ouvertes vers l'intérieur ou vers l'extérieur (18, 89), recevant des segments de branche (12) parallèles d'enroulements ondulés (10) dans chaque rainure (18, 89) d'une rangée radiale et reliés par des têtes d'enroulement (14) en forme de dièdre, du côté frontal, à l'extérieur du paquet de tôles de stator ou de rotor (20, 88),
**caractérisé en ce que**
chaque position de fil, radiale dans les rainures (18, 89) est occupée par des segments de branche (12) d'un certain nombre d'enroulements ondulés (10) dont les têtes d'enroulement (14) se recroisent dans une direction périphérique et sont préformées pour être repoussées en partie du plan des segments de branche (12) correspondants.
